# EUROPÄISCHE PATENTSCHRIFT

(11) **EP 4 065 625 B1**
(45) Veröffentlichungstag und Bekanntmachung des Hinweises auf die Patenterteilung: **02.07.2025**
(21) Anmeldenummer: 20808132.3
(22) Anmeldetag: 23.11.2020
(51) Int. Cl.: C08G 59/02, C08G 59/14, C08G 59/34, C08C 19/06, C08C 19/40, C08G 65/26

(54) **POLYETHERMODIFIZIERTE POLYBUTADIENE UND VERFAHREN ZU DEREN HERSTELLUNG**
POLYETHER-MODIFIED POLYBUTADIENE AND PROCESS FOR ITS PREPARATION
POLYBUTADIÈNE POLYÉTHERMODIFIÉ ET SON PROCÉDÉ DE FABRICATION

(30) Priorität: 28.11.2019 EP 19212066
(43) Veröffentlichungstag der Anmeldung: 05.10.2022
(73) Patentinhaber: Evonik Operations GmbH, 45128 Essen (DE)
(72) Erfinder: SCHUBERT, Frank, 47506 Neukirchen-Vluyn (DE); HENNING, Frauke, 45259 Essen (DE); OTTO, Sarah, 45138 Essen (DE); DZIALKOWSKY, Frank, 42555 Velbert-Langenberg (DE); HAHN, Heike, 44879 Bochum (DE)
(74) Vertreter: Evonik Patent Association
(86) Internationale Anmeldenummer: PCT/EP2020/083013
(87) Internationale Veröffentlichungsnummer: WO 2021/105037

(56) Entgegenhaltungen:
- EP-A1- 2 003 156
- JP-A- 2011 038 003
- Q. GAO, MACROMOLECULAR CHEMISTRY AND PHYSICS, vol. 214, no. 15, 2013, pages 1677 - 1687, XP002799119

## Beschreibung

Die vorliegende Erfindung betrifft ein Verfahren zur Herstellung von polyethermodifizierten Polybutadienen sowie gemäß diesem Verfahren herstellbare polyethermodifizierte Polybutadiene, wobei das Verfahren folgende Schritte umfasst:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

Die erfindungsgemäßen polyethermodifizierten Polybutadiene sind also durch eine direkte Alkoxylierung seitständig hydroxyfunktioneller Polybutadiene erhältlich und weisen seitständige (kammständige) Polyetherreste auf.

Polybutadiene mit seitständigen Polyetherresten sind bekannt und werden nach dem Stand der Technik beispielsweise durch eine Umsetzung von reaktiven, funktionalisierten Polybutadienen mit Polyethern hergestellt. So beschreiben Q. Gao et. al. in Macromolecular Chemistry and Physics (2013), 214(15), 1677-1687 amphiphile Polymer-Kammstrukturen, die durch Graften (Pfropfen) von Polyethylenglycol an eine Polybutadien-Hauptkette hergestellt werden. Gemäß JP 2011038003 werden mit Maleinsäureanhydrid-Einheiten funktionalisierte Polybutadiene mit Amino-terminierten Polyethern umgesetzt. Es entstehen maleinisierte Polybutadiene mit kammständigen Polyetherresten, welche über eine Amid- oder ImidGruppe angebunden sind. In einem ähnlichen Verfahren werden gemäß J. Wang, Journal of Applied Polymer Science (2013), 128(4), 2408-2413 Polyethylenglycole unter Ausbildung einer Ester-Verknüpfung an Polybutadiene mit hohem Anteil an 1,2-Butadien-Monomereinheiten addiert. Hochmolekulare Graftpolymere mit Kammstruktur werden nach dem in JP 2002105209 offenbarten Verfahren durch eine Addition von epoxidierten Polybutadienen mit OH-funktionellen Polyethern erhalten. H. Decher et. al. nutzen gemäß Polymer International (1995), 38(3), 219-225 die Addition von Isocyanat-terminierten Polyethylenglycolen an hydroxyfunktionelle Polybutadiene.

Weiterhin sind Verfahren zur Herstellung von polyethermodifizierten Polybutadienen bekannt, bei denen hydroxyfunktionelle Polybutadiene mit Epoxidverbindungen umgesetzt werden. So ist aus dem Stand der Technik beispielsweise die Alkoxylierung von OH-terminierten Polybutadienen bekannt.

US 4994621 A beschreibt beispielsweise die Alkoxylierung von hydroxylterminierten Polybutadienen mit Ethylenoxid und Propylenoxid in Gegenwart von Tetramethylammoniumhydroxid. EP 2003156 A1 führt aus, dass die alkalisch katalysierte Alkoxylierung von OH-terminierten Polybutadienen strukturell bedingt und durch die schlechte Löslichkeit alkalischer Katalysatoren kaum möglich ist und bevorzugt stattdessen die Doppelmetallcyanid (DMC)-Katalyse. Die Verwendung OH-terminierter Polybutadiene in der Alkoxylierung führt ausschließlich zu Polyether-Polybutadien-Polyether-Triblockstrukturen. Dieser Blockaufbau ist laut EP 2003156 A1 verantwortlich für die schlechte Mischbarkeit mit anderen Reaktionskomponenten bei der Herstellung von Polyurethanen.

Neben der Alkoxylierung von OH-terminierten Polybutadienen ist auch die Alkoxylierung von seitständig hydroxyfunktionellen Polybutadienen bekannt. So beschreiben Q. Gao et. al. in Macromolecular Chemistry and Physics (2013), 214(15), 1677-1687 die Herstellung eines seitständig polyethermodifizierten Polybutadiens durch Alkoxylierung eines seitständig hydroxyfunktionellen Polybutadiens mit Ethylenoxid. Die Herstellung des dabei eingesetzten seitständig hydroxyfunktionellen Polybutadiens erfolgt zunächst durch Epoxidierung eines Polybutadiens, anschließender Umsetzung des epoxidierten Polybutadiens mit einer Lithium-Polybutadien-Verbindung und schließlich Protonierung des Reaktionsprodukts mit HCIsaurem Methanol. Dieses Verfahren führt zu einem Polybutadien mit sowohl seitständigen Polyetherresten als auch seitständigen Polybutadienresten. Da hier je einem Polyetherrest immer auch ein Polybutadienrest gegenübersteht, führt dieses Verfahren zu polyethermodifizierten Polybutadienen mit niedrigen HLB-Werten (HLB ~ hydrophilic lipophilic balance). Zudem sind die polyethermodifizierten Polybutadiene im Polybutadienteil verzweigt. Polyethermodifizierte Polybutadiene mit höheren HLB-Werten und/oder unverzweigtem Polybutadienteil sind durch dieses Verfahren nicht herstellbar. Ein weiterer Nachteil des Verfahrens ist die Verwendung von metallorganischen Verbindungen (n-BuLi und Lithium-Polybutadien), die aufgrund ihrer hohen Luft- und Feuchtigkeitsempfindlichkeit besondere Anforderungen an die Prozessführung stellt. Dies erschwert die industrielle Umsetzung dieses Verfahrens. Aus dem Stand der Technik ist bislang kein Verfahren zur Herstellung von vorzugsweise linearen Polybutadienen mit seitständigen Polyetherketten durch eine einfache, direkte Alkoxylierungsreaktion von seitständig hydroxyfunktionellen Polybutadienen mit Alkylenoxiden, wobei die seitständig hydroxyfunktionellen Polybutadiene aus epoxyfunktionellen Polybutadienen ohne Verwendung von metallorganischen Verbindungen, wie Lithium-Polybutadien, hergestellt werden, bekannt. Zusammenfassend bleibt festzuhalten, dass aus dem Stand der Technik bislang kein Verfahren zur Herstellung von linearen Polybutadienen mit kammständigen Polyetherketten durch eine einfache, direkte Alkoxylierungsreaktion mit Alkylenoxiden bekannt ist.

Die chemische Modifizierung von Polybutadien mit Hilfe der Epoxidierung und Folgereaktionen ist aus der Literatur bekannt. Die Epoxidringöffnung findet meist durch eine Reaktion mit Aminen statt. JP 53117030 und DE 2943879 beschreiben die Addition von Ethanolamin bzw. Diethanolamin, EP 351135 und DE 3305964 die Umsetzung der Epoxidgruppen mit Dimethylamin. DD 206286 offenbart die Addition von primären und sekundären Aminen mit 4 bis 20 C-Atomen an epoxidierte Polybutadiene in polaren Lösemitteln. Darüber hinaus ist die Modifizierung von Polybutadien mit Fettsäuren bekannt. So beschreibt die DE 3442200 die Addition von C₆-C₂₂ Carbonsäuren an epoxidiertes Polybutadien. Eine weitere Alkoxylierung der Reaktionsprodukte wird in diesen Schriften nicht offenbart.

Amin-funktionelle Polybutadiene sind im Sinne der vorliegenden Erfindung als Startverbindungen für die Alkoxylierung wenig geeignet, da sie den Produkten einen oft unerwünschten basischen Charakter verleihen, Anlass zu Verfärbungen geben oder z.B. Alkoxylierungskatalysatoren wie Doppelmetallcyanide inhibieren.

Die Addition von Alkoholen und Wasser an epoxidiertes Polybutadien scheint laut Stand der Technik ungleich schwieriger als die Addition von Aminen und Carbonsäuren zu sein. Qing Gao et. al. beschreiben in J. Macromol. Sci., Part A: Pure and Applied Chemistry (2013), 50, 297-301 die Trifluormethansulfonsäure-katalysierte Addition von Wasser an epoxidierte Polybutadiene in THF. Die WO 2016/142249 A1 zielt auf die Herstellung glasartiger Polymere durch Addition von Wasser oder Alkoholen mit 1 bis 4 C-Atomen an die Epoxidgruppen von Polybutadien ab und beschränkt sich auf die Herstellung von OH-funktionellen Polybutadienen mit niedrigen Molmassen von 300 bis 2000 g/mol und einem hohem Gehalt von 50 % bis 80 % an 1,2-vinylischen und 1,2-cyclovinylischen Doppelbindungen.

Polybutadiene und modifizierte Polybutadiene werden vielfach als Reaktivkomponente oder Formulierungsbestandteil eingesetzt, um z.B. Polymere hydrophob auszustatten oder zu flexibilisieren und die mechanischen Eigenschaften zu verbessern. Den Einsatzmöglichkeiten alkoxylierter Polyethermodifizierter Polybutadiene sind derzeit jedoch durch die Beschränkung auf wenige verfügbare Triblockstrukturen häufig Grenzen gesetzt. Es fehlt bisher die Möglichkeit, den chemischen Aufbau der polyethermodifizierten Polybutadiene in weiten Grenzen zu variieren. Zudem gibt es kein einfaches Herstellverfahren für solche Polymere.

Die Aufgabe der vorliegenden Erfindung war es, zumindest einen Nachteil des Standes der Technik zu überwinden.

Es bestand insbesondere die Aufgabe, ein verbessertes Verfahren zur Herstellung von vorzugsweise linearen Polybutadienen, die kammständig (seitständig) mit Polyetherresten modifiziert sind, bereitzustellen. Das Verfahren sollte weiterhin einen prozesstechnisch sehr einfachen Zugang zu vorzugsweise linearen Polybutadienen mit seitständigen Polyetherresten ermöglichen und beispielsweise ohne Verwendung von lithiumorganischen Verbindungen durchführbar sein. Die polyethermodifizierten Polybutadiene sollten dabei ferner durch eine direkte Alkoxylierung von seitständig hydroxyfunktionellen Polybutadienen erhältlich sein. Dabei bestand zudem die Aufgabe, im Verfahren verbesserte seitständig hydroxyfunktionelle Polybutadiene als Vorprodukte und Kettenstarter für die Alkoxylierung bereitzustellen.

Überraschenderweise wurde nun gefunden, dass ein Verfahren zu Herstellung von polyethermodifizierten Polybutadienen diese Aufgabe löst, welches die folgenden Schritte umfasst:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

Überraschenderweise wurde weiterhin gefunden, dass sich Polybutadiene mit hohem Anteil an 1,4-Einheiten und geringem Gehalt an vinylischen 1,2- Einheiten nach der Epoxidierung mit Wasserstoffperoxid leicht unter sauer katalysierter Ringöffnung mit OH-funktionellen Verbindungen in seitständig OH-funktionelle Polybutadiene (Polybutadienole) umwandeln und anschließend mit Alkylenoxiden alkoxylieren lassen.

Gelöst wird die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Die nachfolgenden Formeln (1) bis (5) beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten. Die verwendeten Indexzahlen sowie die Wertbereiche der angegebenen Indizes werden als Mittelwerte der möglichen statistischen Verteilung der tatsächlichen vorhandenen Strukturen und/oder deren Mischungen verstanden. Die verschiedenen Fragmente beziehungsweise Wiederholungseinheiten der in den nachfolgenden Formeln (1) bis (5) beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Wiederholungseinheiten mitumfasst. Werden also im Rahmen der vorliegenden Erfindung Verbindungen, wie z.B. Polybutadiene (A), epoxyfunktionelle Polybutadiene (C), hydroxyfunktionelle Polybutadiene (E), polyethermodifizierte Polybutadiene (G) oder polyethermodifizierte Polybutadiene (K) enthaltend endverkappte Polyetherreste beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der Erfindung ist somit ein Verfahren zur Herstellung von einem oder mehreren polyethermodifizierten Polybutadienen, umfassend die Schritte:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

Es ist bevorzugt, dass das erfindungsgemäße Verfahren außerdem mindestens einen der folgenden optionale Schritte umfasst:
d) Umsetzung des mindestens einen polyethermodifizierten Polybutadiens (G) mit mindestens einem Endverkappungsreagenz (H) zu mindestens einem polyethermodifizierten Polybutadien (K) enthaltend endverkappte Polyetherreste;
e) Farbaufhellung des mindestens einen polyethermodifizierten Polybutadiens (G) bzw. (K).

Vorzugsweise ist das Verfahren weiterhin dadurch gekennzeichnet, dass

| | |
|---|---|
| im Schritt a) | >0 % bis 70 %, bevorzugt 1 % bis 50 %, weiter bevorzugt 2 % bis 40 %, noch weiter bevorzugt 3% bis 30 % und besonders bevorzugt 4 % bis 20 % der Doppelbindungen des mindestens einen Polybutadiens (A) mit Hilfe von Perameisensäure, welche *in situ* aus Ameisensäure und H₂O₂ erzeugt wird, epoxidiert werden; |
| im Schritt b) | an die Epoxidgruppen des mindestens einen epoxyfunktionellen Polybutadiens (C) unter Ringöffnung ein oder mehrere kurzkettige Alkohole mit 1 bis 6 Kohlenstoffatomen, insbesondere Isobutanol, addiert werden, wobei bevorzugt ein oder mehrere saure Katalysatoren, insbesondere Trifluormethansulfonsäure, eingesetzt werden; |
| im Schritt c) | an die entstandenen seitständigen OH-Gruppen des mindestens einen hydroxyfunktionellen Polybutadiens (E) eine oder mehrere epoxyfunktionelle Verbindungen (F) ausgewählt aus Alkylenoxiden und ggf. weiteren epoxyfunktionellen Monomeren in einer Alkoxylierungsreaktion addiert werden, wobei bevorzugt zusätzlich ein Zn/Co-Doppelmetallcyanid-Katalysator oder basische Katalysatoren wie Amine, Guanidine, Amidine, Alkalihydroxide oder Alkalialkoholate verwendet werden; |
| Im Schritt d) | optional die Umsetzung des mindestens einen polyethermodifizierten Polybutadiens (G) mit mindestens einem Endverkappungsreagenz (H), ausgewählt aus der Gruppe von Carbonsäuren, Carbonsäureanhydriden, halogenierten Kohlenwasserstoffen, Isocyanaten und Carbonaten zu mindestens einem polyethermodifizierten Polybutadien (K) enthaltend endverkappte Polyetherreste erfolgt; |
| im Schritt e) | optional die Farbaufhellung des mindestens einen polyethermodifizierten Polybutadiens (G) bzw. (K) mit Aktivkohle und/oder Wasserstoffperoxid vorgenommen wird. |

Durch das erfindungsgemäße Verfahren wird es erstmalig ermöglicht, lineare Polybutadiene durch eine einfache direkte Alkoxylierung an den seitständigen OH-Gruppen mit kammständigen Polyetherresten zu modifizieren. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Hydroxylfunktionalisierung einstellbar und eröffnet eine große strukturelle Vielfalt bei den hydroxyfunktionellen Polybutadienen (E).

Das im Stand der Technik bekannte Graften (Pfropfen) von Polyethern an Polybutadien erfolgt in der Praxis selten quantitativ und die Reaktionsprodukte enthalten üblicherweise freie Anteile an Polyethern und gegebenenfalls nicht funktionalisierte Polybutadiene. Die vorbeschriebene Addition von OH-funktionellen Polyethern über ihre OH-Gruppe an epoxidierte Polybutadiene geschieht ebenfalls meist unvollständig und die Produkte enthalten restliche, nicht umgesetzte Epoxidgruppen. Werden die Polyether im Überschuss eingesetzt, so lässt sich der Restgehalt and Epoxidgruppen zwar reduzieren, die Überschusspolyether verbleiben aber im Produkt, da sie destillativ nicht abgetrennt werden können.

Die erfindungsgemäß erhältlichen Polybutadiene mit kammständigen Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen alle Polyether chemisch über eine Etherbindung an das Polybutadien angebunden. Damit unterscheiden sich die erfindungsgemäßen Verfahrensprodukte deutlich durch ihre erhöhte Reinheit von den bisher aus dem Stand der Technik bekannten Verbindungen.

Zur bevorzugten Ausgestaltung von Schritt a) des erfindungsgemäßen Verfahrens:
Im Schritt a) des erfindungsgemäßen Verfahrens erfolgt die Umsetzung mindestens eines Polybutadiens (A) mit mindestens einem Epoxidierungsreagenz (B) zu mindestens einem epoxyfunktionellen Polybutadien (C).

Bei dieser Umsetzung werden Doppelbindungen des Polybutadiens (A) in Epoxidgruppen überführt. Verschiedene Methoden zur Epoxidierung von Polybutadienen mit z.B. Percarbonsäuren und Wasserstoffperoxid sind dem Fachmann bekannt und z.B. in CN 101538338, JP 2004346310, DD 253627 and WO 2016/142249 A1 offenbart. Besonders geeignet zur Herstellung der epoxyfunktionellen Polybutadiene (C) mit hohem Anteil an 1,4-Einheiten ist Perameisensäure, die auch *in situ* aus Ameisensäure in Gegenwart von Wasserstoffperoxid gebildet werden kann. Die Epoxidierung findet bevorzugt in einem Lösemittel wie Toluol oder Chloroform statt, das nach der Umsetzung und dem Auswaschen von evtl. Peroxidresten destillativ entfernt wird.

Die Polybutadiene (A) sind Polymere des Buta-1,3-diens. Die Polymerisation der Buta-1,3-dien-Monomere erfolgt dabei im Wesentlichen unter 1,4- und/oder 1,2-Verknüpfung. Eine 1,4-Verknüpfung führt zu sogenannten 1,4-trans-Einheiten und/oder 1,4-cis-Einheiten, die zusammengefasst auch als 1,4-Einheiten bezeichnet werden. Eine 1,2-Verknüpfung führt zu sogenannten 1,2-Einheiten. Die 1,2-Einheiten tragen eine Vinylgruppe und werden auch als vinylische 1,2-Einheiten bezeichnet. Die 1,2-Einheiten werden im Rahmen der vorliegenden Erfindung auch mit "(X)", die 1,4-trans-Einheiten mit "(Y)" und die 1,4-*cis-*Einheiten mit "(Z)" bezeichnet:

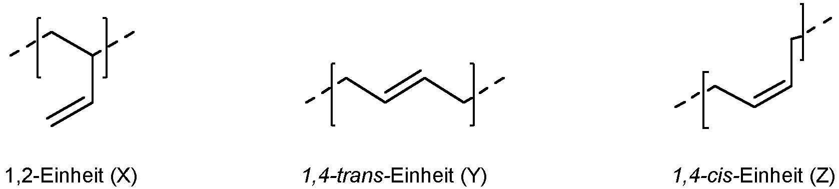

Die in den Einheiten enthaltenen Doppelbindungen werden analog als 1,4-trans-Doppelbindungen, 1,4*-cis-*Doppelbindungen beziehungsweise 1,2-Doppelbindungen oder 1,2-Vinyl-Doppelbindungen bezeichnet. Die 1,4-trans-Doppelbindungen und 1,4-cis-Doppelbindungen werden zusammenfassend auch als 1,4-Doppelbindungen bezeichnet.

Es handelt sich bei den Polybutadienen (A) also um unmodifizierte Polybutadiene. Die Polybutadiene (A) und ihre Herstellverfahren sind dem Fachmann bekannt. Die Herstellung erfolgt vorzugsweise mittels einer radikalischen, einer anionischen oder einer koordinativen Kettenpolymerisation.

Die radikalische Kettenpolymerisation wird bevorzugt als Emulsionspolymerisation durchgeführt. Dies führt zu einem statistischen Auftreten der drei genannten Einheiten. Bei niedriger Reaktionstemperatur (ca. 5 °C) sinkt der Anteil an Vinylgruppen. Die Initiierung erfolgt vorzugsweise mit Kaliumperoxodisulfat und Eisensalzen oder auch mit Wasserstoffperoxid.

Bei der anionischen Kettenpolymerisation erfolgt die Initiierung der Kettenpolymerisation vorzugsweise mit Butyllithium. Das so erhaltene Polybutadien (A) enthält etwa 40 % 1,4-cis-Einheiten und 50 % 1,4*-trans-*Einheiten.

Bei der koordinativen Kettenpolymerisation werden vorzugsweise Ziegler-Natta-Katalysatoren eingesetzt, insbesondere stereospezifische Ziegler-Natta-Katalysatoren, die zu einem Polybutadien (A) mit einem hohen Anteil an 1,4-cis-Einheiten führen.

Bei der Polymerisation von 1,3-Butadien können durch Neben- oder Folgereaktionen, wie z.B. einer Folgereaktion der Doppelbindungen der resultierenden 1,2- und 1,4-Einheiten des Polybutadiens, auch verzweigte Polybutadiene (A) entstehen. Bevorzugt handelt es sich bei den erfindungsgemäß eingesetzten Polybutadienen (A) aber um lineare, also unverzweigte Polybutadiene. Es ist auch möglich, dass die Polybutadiene in geringen Anteilen andere Einheiten als 1,2-Einheiten, 1,4-*trans*-Einheiten oder 1*,*4*-cis-*Einheiten aufweisen. Es ist aber bevorzugt, dass der Massenanteil der Summe von 1,2-Einheiten, 1,4-*trans*-Einheiten und 1,4-cis-Einheiten mindestens 80 %, vorzugweise mindestens 90 %, insbesondere mindestens 99% bezogen auf die Gesamtmasse des mindestens einen Polybutadiens (A), also bezogen auf die Gesamtmasse aller eingesetzten Polybutadiene (A), beträgt.

Für das erfindungsgemäße Verfahren werden vorzugsweise solche Polybutadiene (A) verwendet, die 0 % bis 80 % 1,2-Einheiten und 20 % bis 100 % 1,4-Einheiten, bevorzugt 0 % bis 30 % 1,2-Einheiten und 70 % bis 100 % 1,4-Einheiten, besonders bevorzugt 0 % bis 10 % 1,2-Einheiten und 90 % bis 100 % 1,4-Einheiten, und ganz besonders bevorzugt 0 % bis 5 % 1,2-Einheiten und 95 % bis 100 % 1,4-Einheiten bezogen auf die Summe aus 1,2-Einheiten und 1,4-Einheiten aufweisen.

Es ist also bevorzugt, dass von den Doppelbindungen aller eingesetzten Polybutadiene (A) 0 % bis 80 % 1,2-Vinyl-Doppelbindungen und 20 % bis 100 % 1,4-Doppelbindungen, bevorzugt 0 % bis 30 % 1,2-Vinyl-Doppelbindungen und 70 % bis 100 % 1,4-Doppelbindungen, besonders bevorzugt 0 % bis 10 % 1,2-Vinyl-Doppelbindungen und 90 % bis 100 % 1,4-Doppelbindungen, ganz besonders bevorzugt 0 % bis 5 % 1,2-Vinyl-Doppelbindungen und 95 % bis 100 % 1,4-Doppelbindungen sind.

Für die erfindungsgemäße Herstellung der Produkte werden entsprechend vorzugsweise Polybutadiene (A) der Formel (1) 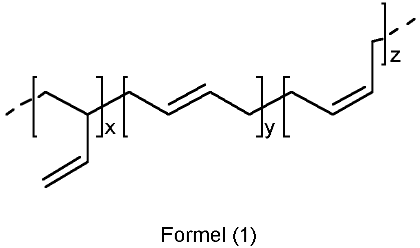 mit einem Gehalt von 0 % bis 80 % 1,2-Vinyl-Doppelbindungen (Index x) und 20 % bis 100 % 1,4-Doppelbindungen (Summe der Indizes y und z), bevorzugt 0 % bis 30 % 1,2-Vinyl-Doppelbindungen und 70 % bis 100 % 1,4-Doppelbindungen, besonders bevorzugt mit 0 % bis 10 % 1,2-Vinyl-Doppelbindungen und 90 % bis 100 % 1,4-Doppelbindungen, ganz besonders bevorzugt mit 0 % bis 5 % 1,2-Vinyl-Doppelbindungen und 95 % bis 100 % 1,4-Doppelbindungen verwendet. Das Verhältnis von 1,4*-trans-*Doppelbindungen (Index y) und 1,4-cis-Doppelbindungen (Index z) ist beliebig.

Die Indizes x, y und z geben dabei die Anzahl der jeweiligen Butadien-Einheit im Polybutadien (A) wieder. Es handelt sich dabei um numerische Mittelwerte (Zahlenmittel) über die Gesamtheit aller Polybutadienpolymere des mindestens einen Polybutadiens (A).

Die mittlere Molmasse und Polydispersität der verwendeten Polybutadiene (A) nach Formel (1) ist beliebig.

Es ist bevorzugt, dass die zahlenmittlere Molmasse Mₙ des mindestens einen Polybutadiens (A) von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse Mₙ des mindestens einen Polybutadiens (A) von 2100 g/mol bis 20000 g/mol, besonders bevorzugt von 2200 g/mol bis 10000 g/mol, ganz besonders bevorzugt von 2300 g/mol bis 5000 g/mol beträgt.

Die zahlenmittlere Molmasse Mₙ, die gewichtsmittlere Molmasse M_{w} und die Polydispersität (M_{w}/Mₙ) werden im Rahmen der vorliegenden Erfindung vorzugsweise mittels Gel-Permeations-Chromatographie (GPC) bestimmt, wie in den Beispielen beschrieben.

Es ist weiterhin bevorzugt, dass das mindestens eine Polybutadien (A) im Zahlenmittel 5 bis 360, besonders bevorzugt 10 bis 180, ganz besonders bevorzugt 15 bis 90 Einheiten ausgewählt aus der Gruppe bestehend aus 1,2-Einheiten, 1,4-*cis*-Einheiten und 1,4-*trans*-Einheiten aufweist.

Alternativ ist es bevorzugt, dass das mindestens eine Polybutadien (A) im Zahlenmittel 35 bis 360, besonders bevorzugt 40 bis 180, ganz besonders bevorzugt 45 bis 90 Einheiten ausgewählt aus der Gruppe bestehend aus 1,2-Einheiten, 1,4-*cis*-Einheiten und 1,4-*trans*-Einheiten aufweist.

Es ist weiterhin bevorzugt, dass die Viskosität der verwendeten Polybutadiene (A) 50 bis 50000 mPas vorzugsweise 100 bis 10000 mPas, insbesondere 500 bis 5000 mPas beträgt (bestimmt gemäß DIN EN ISO 3219:1994-10).

Besonders bevorzugt eingesetzte Polybutadiene sind die von Evonik Industries AG / Evonik Operations GmbH kommerziell erhältlichen Produkte Polyvest^{®} 110 und Polyvest^{®} 130 mit den folgenden typischen Kenndaten:
Polyvest^{®} 110: ca. 1 % 1,2-Vinyl-Doppelbindungen, ca. 24 % 1,4-*trans*-Doppelbindungen, ca. 75 % *1,4-cis*-Doppelbindungen, zahlenmittlere Molmasse Mₙ ca. 2600 g/mol, Viskosität (20 °C) 700-860 mPas (gemäß DIN EN ISO 3219:1994-10),
Polyvest^{®} 130: ca. 1 % 1,2-Vinyl-Doppelbindungen, ca. 22 % 1,4-*trans*-Doppelbindungen, ca. 77 % *1,4-cis*-Doppelbindungen, zahlenmittlere Molmasse Mₙ ca. 4600 g/mol, Viskosität (20 °C) 2700-3300 mPas (gemäß DIN EN ISO 3219:1994-10).

Besonders bevorzugt eingesetzte Polybutadiene sind weiterhin die von Synthomer PLC erhältlichen Produkte Lithene ultra AL und Lithene ActiV 50 mit den folgenden typischen Kenndaten:
Lithene ultra AL: ca. 40 % 1,2-Vinyl-Doppelbindungen, ca. 60 % 1,4- Doppelbindungen,
Lithene ActiV 50: ca. 70 % 1,2-Vinyl-Doppelbindungen, ca. 30% 1,4- Doppelbindungen.

Der Epoxidierungsgrad wird z.B. mit Hilfe der ¹³C-NMR-Spektroskopie oder der Epoxidzahl-Titration (Bestimmungen des Epoxid-Äquivalents gemäß DIN EN ISO 3001:1999) quantitativ bestimmt und kann über die Prozessbedingungen, insbesondere über die Einsatzmenge an Wasserstoffperoxid in Relation zur vorgelegten Menge an Doppelbindungen im Polybutadien, gezielt und reproduzierbar eingestellt werden.

Es ist bevorzugt, dass im Schritt a) des erfindungsgemäßen Verfahrens >0 % bis 70 %, bevorzugt 1 % bis 50 %, weiter bevorzugt 2 % bis 40 %, noch weiter bevorzugt 3% bis 30 % und besonders bevorzugt 4 % bis 20 % aller Doppelbindungen des mindestens einen Polybutadiens (A) epoxidiert werden.

Als Epoxidierungsreagenz (B) sind prinzipiell alle dem Fachmann bekannten Epoxidierungsmittel einsetzbar. Es ist bevorzugt, dass das Epoxidierungsreagenz (B) ausgewählt ist aus der Gruppe der Peroxycarbonsäuren (Percarbonsäuren, Persäuren), vorzugsweise aus der Gruppe bestehend aus *meta-*Chlorperbenzoesäure, Peroxyessigsäure (Peressigsäure) und Peroxyameisensäure (Perameisensäure), insbesondere Peroxyameisensäure (Perameisensäure). Die Peroxycarbonsäuren werden dabei vorzugsweise *in situ* aus der entsprechenden Carbonsäure und Wasserstoffperoxid gebildet.

Es ist besonders bevorzugt, dass das mindestens eine Epoxidierungsreagenz (B) Perameisensäure enthält, welche vorzugweise *in situ* aus Ameisensäure und Wasserstoffperoxid gebildet wird.

Die Epoxidierung des mindestens einen Polybutadiens (A) findet statistisch über die Polybutadienkette verteilt bevorzugt an den 1,4-Doppelbindungen statt. Eine Epoxidierung der 1,2-Doppelbindungen kann ebenfalls stattfinden und findet an diesen ebenfalls statistisch über die Polybutadienkette verteilt statt. Eine Epoxidierung der 1,2-Doppelbindungen ist aber gegenüber einer Epoxidierung der 1,4-Doppelbindungen benachteiligt. Das Reaktionsprodukt enthält somit epoxyfunktionelle Polybutadienpolymere, die sich in ihrem Epoxidierungsgrad voneinander unterscheiden. Alle angegebenen Epoxidierungsgrade sind daher als Mittelwerte zu verstehen.

Es ist weiterhin bevorzugt, während des erfindungsgemäßen Verfahrens zur Stabilisierung der Edukte, Intermediate und Produkte, Stabilisatoren bzw. Antioxidantien zu verwenden, um ungewollte Polymerisationsreaktionen der Doppelbindungen zu vermeiden. Hierfür eignen sich z.B. die dem Fachmann bekannten sterisch gehinderten Phenole, kommerziell erhältlich zum Beispiel als Anox^{®} 20, Irganox^{®} 1010 (BASF), Irganox^{®} 1076 (BASF) und Irganox^{®} 1135 (BASF). Es ist ferner bevorzugt, den gesamten Herstellprozess unter einer Inertatmosphäre, z.B. unter Stickstoff, durchzuführen. Auch sollten vorzugsweise die unmodifizierten Edukte, also das mindestens eine Polybutadien (A), wie auch die erfindungsgemäßen polyethermodifizierten Fertigprodukte, also das mindestens eine polyethermodifizierte Polybutadien (G) bzw. (K), möglichst unter Ausschluss von Luft aufbewahrt werden.

### Zur bevorzugten Ausgestaltung von Schritt b) des erfindungsgemäßen Verfahrens:

Im Schritt b) des erfindungsgemäßen Verfahrens erfolgt die Umsetzung des mindestens einen epoxyfunktionellen Polybutadiens (C) mit mindestens einer hydroxyfunktionellen Verbindung (D) zu mindestens einem hydroxyfunktionellen Polybutadien (E).

Bei dieser Umsetzung findet eine Addition (Additionsreaktion) der mindestens einen hydroxyfunktionellen Verbindung (D) an das mindestens eine epoxyfunktionelle Polybutadien (C) statt. Die Umsetzung erfolgt also unter Bildung von einer oder mehreren kovalenten Bindungen zwischen der mindestens einen hydroxyfunktionellen Verbindung (D) und dem mindestens einen epoxyfunktionellen Polybutadien (C). Die Umsetzung umfasst vorzugsweise (zumindest idealisiert) einen Reaktionsschritt, bei dem ein nukleophiler Angriff mindestens einer Hydroxygruppe der mindestens einen hydroxyfunktionellen Verbindungen (D) an mindestens eine Epoxygruppe des mindestens einen epoxyfunktionellen Polybutadiens (C) unter Ringöffnung dieser mindestens einen Epoxygruppe erfolgt.

Prinzipiell können im Sinne des erfindungsgemäßen Verfahrens alle Verbindungen mit mindestens einer Hydroxylgruppe an die Epoxidgruppen des Polybutadiens addiert werden. Hydroxyfunktionelle Verbindungen (D) können beispielsweise aus der Gruppe bestehend aus Alkoholen, Carbonsäuren und Wasser ausgewählt werden. Bevorzugt wird die mindestens eine hydroxyfunktionelle Verbindungen (D) aus der Gruppe der monofunktionellen Alkohole mit 1 bis 6 Kohlenstoffatomen, weiter bevorzugt aus der Gruppe der monofunktionellen Alkohole mit 2 bis 4 Kohlenstoffatomen, besonders bevorzugt aus der Gruppe bestehend aus Ethanol, 1-Propanol, Isopropanol (iso-Propanol), 1-Butanol, 2-Butanol und Isobutanol (iso-Butanol) ausgewählt. Dabei können auch beliebige Gemische dieser Alkohole eingesetzt werden. Es ist aber insbesondere bevorzugt, dass als hydroxyfunktionelle Verbindung (D) nicht Methanol eingesetzt wird. Als hydroxyfunktionelle Verbindung (D) ist auch Wasser geeignet. Wasser kann allein oder in Mischung mit einer oder mehreren anderen hydroxyfunktionellen Verbindungen (D) eingesetzt werden. So können beispielsweise Mischungen von Alkohol und Wasser oder Mischungen von Carbonsäure und Wasser im Schritt b) eingesetzt werden. Es ist also nicht nötig, die mindestens eine hydroxyfunktionelle Verbindung (D), wie beispielsweise Alkohol oder Carbonsäure, zu trocknen und von Wasser zu befreien.

Das molare Verhältnis der OH-Gruppen der hydroxyfunktionellen Verbindung (D) zu den Epoxidgruppen des epoxyfunktionellen Polybutadiens (C) kann in einem weiten Bereich variiert werden. Es ist aber bevorzugt, die hydroxyfunktionellen Verbindungen (D) bezogen auf das stöchiometrische Verhältnis von Hydroxygruppen zu den Epoxidgruppen des epoxyfunktionellen Polybutadiens (C) in einem stöchiometrischen Überschuss einzusetzen, um einen quantitativen Umsatz aller Epoxidgruppen zu erreichen. Es ist daher bevorzugt, dass im Schritt b) die Gesamtzahl der Hydroxygruppen aller hydroxyfunktionellen Verbindungen (D) zur Gesamtzahl der Epoxidgruppen aller epoxyfunktionellen Polybutadiene (C) von >1:1 bis 50:1, weiter bevorzugt von 2:1 bis 35:1, noch weiter bevorzugt 3:1 bis 30:1, besonders bevorzugt von 3:1 bis 25:1 beträgt. Der Überschuss an Verbindung (D) kann nach der Umsetzung z.B. destillativ entfernt und bei Bedarf wiederverwendet werden.

In einer bevorzugten Ausführungsform findet die Reaktion in Anwesenheit mindestens eines sauren Katalysators statt. Der Katalysator ist wahlweise im Reaktionsgemisch homogen löslich oder heterogen als Feststoff darin verteilt, wie z.B. sulfonsaure Ionenaustauscher. Bevorzugt im Sinne der Erfindung sind Katalysatoren wie Schwefelsäure, Sulfonsäuren und Trifluoressigsäure, besonders bevorzugt ist Trifluormethansulfonsäure. Es ist also bevorzugt, dass im Schritt b) eine Säure, weiter bevorzugt Schwefelsäure, Sulfonsäuren und/oder Trifluoressigsäure, besonders bevorzugt Trifluormethansulfonsäure als Katalysator eingesetzt wird.

Die Art und Einsatzmenge der Säure werden so gewählt, dass eine möglichst rasche und quantitative Addition der mindestens einen hydroxyfunktionellen Verbindung (D) an die Epoxidgruppen des mindestens einen epoxyfunktionellen Polybutadiens (C) erfolgt. Vorzugsweise wird Trifluormethansulfonsäure in einer Konzentration von 1 wppm bis 1000 wppm (wppm = Massen-ppm), besonders bevorzugt in einer Konzentration von 50 wppm bis 300 wppm bezogen auf die Reaktionsmischung eingesetzt.

Die Reaktion des mindestens einen epoxyfunktionellen Polybutadiens (C) mit der mindestens einen hydroxyfunktionellen Verbindung (D) in Gegenwart eines sauren Katalysators findet vorzugsweise im Temperaturbereich von 20 °C bis 120 °C statt und ist nach oben durch den Siedepunkt der hydroxyfunktionellen Verbindung (D) bzw. bei Verwendung mehrerer hydroxyfunktioneller Verbindungen (D) durch den Siedepunkt der flüchtigsten hydroxyfunktionellen Verbindung (D) begrenzt. Bevorzugt wird die Umsetzung bei 50 °C bis 90 °C durchgeführt. Die Komponenten werden einige Stunden gerührt, bis die Epoxidgruppen möglichst vollständig umgesetzt sind. Die Analyse auf Epoxidgruppen kann wahlweise durch NMR-spektroskopische Analyse oder durch bekannte Methoden der Epoxidzahl-Titration erfolgen (wie in den Beispielen beschrieben). Die Reaktionsbedingungen in Schritt b) werden vorzugsweise so gewählt, dass mehr als 97 % der in Schritt a) generierten Epoxidgruppen unter Ringöffnung umgesetzt werden. Es ist besonders bevorzugt, dass im Produkt von Schritt b), also im mindestens einen hydroxyfunktionellen Polybutadien (E), keine Epoxidgruppen mehr nachweisbar sind.

Nach der Reaktion wird das saure Reaktionsgemisch neutralisiert. Zu diesem Zweck kann prinzipiell jedes basische Neutralisationsmittel zugesetzt werden. Bevorzugt wird die Neutralisation mit Natriumhydrogencarbonat, in fester Form oder als wässrige Lösung, durchgeführt. Die gegebenenfalls überschüssigen hydroxyfunktionellen Verbindungen (D) sowie gegebenenfalls Wasser werden vorzugsweise destillativ entfernt und ausgefallene Salze werden bei Bedarf abfiltriert. Bevorzugt ist dabei die Verwendung von wässriger Natriumhydrogencarbonat-Lösung, da so farbhellere Produkte erhalten werden.

Aus jeweils einer Epoxidgruppe eines epoxyfunktionellen Polybutadiens (C) resultiert nach Ringöffnung durch eine hydroxyfunktionelle Verbindung (D) der Formel A-OH eine Wiederholungseinheit der Formel (2a), (2b) oder (2c):

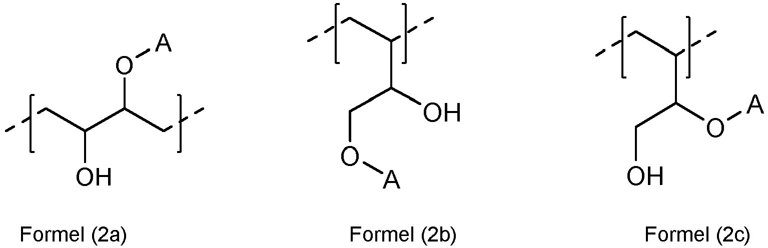

A ist dabei vorzugsweise ein einbindiger organischer Rest, der auch weitere Hydroxylgruppen tragen kann, oder ein Wasserstoffradikal. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Im Fall von Wasser als hydroxyfunktionelle Verbindung (D) ist A ein Wasserstoffradikal, also A = H. Wird beispielsweise eine Carbonsäure als hydroxyfunktionelle Verbindung (D) eingesetzt, so ist A ein Acylrest. Es resultiert also aus jeder umgesetzten Epoxidgruppe mindestens eine seitständige OH-Gruppe. Ist, wie im Fall von Wasser, A = H so resultieren aus jeder umgesetzten Epoxidgruppe genau zwei seitständige OH-Gruppen. In allen anderen Fällen, also A ≠ H, resultiert aus jeder umgesetzten Epoxidgruppe genau eine seitständige OH-Gruppe.

Im Falle der erfindungsgemäß bevorzugten Polybutadiene (A) mit einem überwiegenden Anteil von 1,4-Einheiten, überwiegen von den Wiederholungseinheiten der Formeln (2a), (2b) und (2c) solche der Formel (2a).

Es ist bevorzugt, dass das mindestens eine hydroxyfunktionelle Polybutadien (E) 20 % bis 100 %, bevorzugt 70 % bis 100 %, weiter bevorzugt 90 % bis 100 %, besonders bevorzugt 95 % bis 100% Wiederholungseinheiten der Formel (2a) bezogen auf die Summe der Wiederholungseinheiten der Formeln (2a), (2b) und (2c) aufweist.

Es ist weiterhin bevorzugt, dass der Anteil der Wiederholungseinheiten der Formeln (2a), (2b) und (2c) zusammengenommen >0 % bis 70 %, bevorzugt 1 % bis 50 %, weiter bevorzugt 2 % bis 40 %, noch weiter bevorzugt 3% bis 30 % und besonders bevorzugt 4 % bis 20 % bezogen auf die Gesamtzahl aller Wiederholungseinheiten des mindestens einen hydroxyfunktionellen Polybutadiens (E) beträgt. Es ist entsprechend bevorzugt, dass der Hydroxylierungsgrad >0 % bis 70 %, bevorzugt 1 % bis 50 %, weiter bevorzugt 2 % bis 40 %, noch weiter bevorzugt 3% bis 30 % und besonders bevorzugt 4 % bis 20 % beträgt. Bei vollständiger Umsetzung in Schritt b) entspricht der Hydroxylierungsgrad des hydroxyfunktionellen Polybutadiens (E) dem Epoxidierungsgrad des entsprechenden epoxyfunktionellen Polybutadiens (C).

### Zur bevorzugten Ausgestaltung von Schritt c) des erfindungsgemäßen Verfahrens:

Im Schritt c) des erfindungsgemäßen Verfahrens erfolgt die Umsetzung des mindestens einen hydroxyfunktionellen Polybutadiens (E) mit mindestens einer epoxyfunktionellen Verbindung (F) zu mindestens einem polyethermodifizierten Polybutadien (G).

Das mindestens eine hydroxyfunktionelle Polybutadien (E) aus Schritt b) dient im Schritt c) als Startverbindung für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die OH-Gruppen des mindestens einen hydroxyfunktionellen Polybutadiens (E) addiert. Dies führt zur Bildung der erfindungsgemäßen Polybutadiene mit kammständigen (seitständigen) Polyetherketten, also zur Bildung des mindestens einen polyethermodifizierten Polybutadiens (G). Vorzugsweise ist das polyethermodifizierte Polybutadien (G) ein lineares Polybutadien, das kammständig (seitständig) mit Polyetherresten modifiziert ist. Es ist also bevorzugt, dass das polyethermodifizierte Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxyfunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der Gruppe der Alkylenoxide, bevorzugt aus der Gruppe der Alkylenoxide mit 2 bis 18 Kohlenstoffatomen, weiter bevorzugt aus der Gruppe der Alkylenoxide mit 2 bis 8 Kohlenstoffatomen, besonders bevorzugt aus der Gruppe bestehend aus Ethylenoxid, Propylenoxid, 1-Butylenoxid, *cis-2-*Butylenoxid, *trans*-2-Butylenoxid, Isobutylenoxid und Styroloxid ausgewählt ist; und/oder dass die mindestens eine im Schritt c) eingesetzte epoxyfunktionelle Verbindung aus der Gruppe der Glycidylverbindungen, bevorzugt aus der Gruppe der monofunktionellen Glycidylverbindungen, besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, C₁₂/C₁₄-Fettalkoholglycidylether und C₁₃/C₁₅-Fettalkoholglycidylether ausgewählt ist.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die OH-Gruppen des mindestens einen vorgelegten hydroxyfunktionellen Polybutadiens (E) aus Schritt b) gesteuert werden.

Die erfindungsgemäß hergestellten polyethermodifizierten Polybutadiene (G) sind vorzugsweise dadurch gekennzeichnet, dass sie gemäß den Formeln (3a), (3b) und (3c) über eine Ethergruppe an das Polybutadiengerüst gebundene Reste B enthalten,

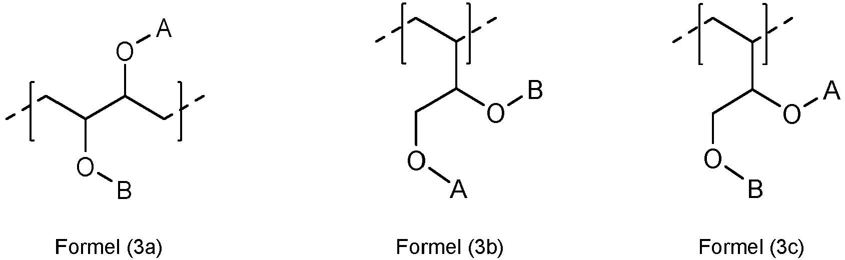

Wie oben zu Schritt b) ausgeführt wurde, stammt der Rest A in den Formeln (3a), (3b) und (3c) aus der Verbindung A-OH, also der im Schritt b) eingesetzten hydroxyfunktionellen Verbindung (D). Wie ebenfalls oben ausgeführt wurde, sind im Schritt b) zwei Fälle zu unterscheiden, nämlich A ≠ H oder A = H. Im ersten Fall, also für A ≠ H, ist der Rest A in den Formeln (3a), (3b) und (3c) identisch mit dem Rest A in den Formeln (2a), (2b) und (2c). Im zweiten Fall, also für A = H, ist der Rest A in den Formeln (3a), (3b) und (3c) jeweils unabhängig voneinander H oder ein Rest B. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Wird beispielsweise eine Carbonsäure als hydroxyfunktionelle Verbindung (D) eingesetzt, so ist A ein Acylrest. Wird jedoch Wasser als hydroxyfunktionelle Verbindung (D) eingesetzt, so ist A in den Formeln (3a), (3b) und (3c) im Falle der Umsetzung mit einer oder mehreren epoxyfunktionellen Verbindung (F) ein Rest B, im Falle der Nichtumsetzung bleibt A Wasserstoff. Es resultiert also aus jeder umgesetzten seitständigen Hydroxygruppe genau ein seitständiger Rest -O-B. Der Rest B ist wiederum aus einem oder mehreren Monomeren, vorzugsweise aus mehreren Monomeren, der mindestens einen eingesetzten epoxyfunktionellen Verbindung (F) aufgebaut.

Im Sinne der Erfindung können prinzipiell alle dem Fachmann bekannten Alkoxylierungskatalysatoren eingesetzt werden, z.B. basische Katalysatoren wie Alkalihydroxide, Alkalimetallalkoholate, Amine, Guanidine, Amidine, Phosphorverbindungen wie Triphenylphosphin, darüber hinaus saure und Lewissaure Katalysatoren wie SnCl₄, SnCl₂, SnF₂, BF₃ und BF₃-Komplexe, sowie Doppelmetallcyanid (DMC)-Katalysatoren.

Vor der Epoxidzufuhr, also vor der Zugabe der mindestens einen eingesetzten epoxyfunktionellen Verbindung (F), wird der mit dem Starter und Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxyfunktionelle Polybutadien (E) oder es kann auch ein bereits entsprechend dem erfindungsgemäßen Verfahren hergestelltes polyethermodifiziertes Polybutadien (G) als Starter eingesetzt werden, wie weiter unten beschrieben wird.

### DMC-Katalyse

Vorzugsweise werden Zink/Cobalt-DMC-Katalysatoren eingesetzt, insbesondere solche, die Zinkhexacyanocobaltat(III) enthalten. Vorzugsweise werden die in US 5,158,922, US 20030119663, WO 01/80994 beschriebenen DMC-Katalysatoren eingesetzt. Die Katalysatoren können amorph oder kristallin sein.

Es ist bevorzugt, dass die Katalysatorkonzentration vorzugsweise bei > 0 wppm bis 1000 wppm, bevorzugt bei > 0 wppm bis 700 wppm, besonders bevorzugt bei 10 wppm bis 500 wppm bezogen auf die Gesamtmasse der entstehenden Produkte beträgt.

Vorzugsweise wird der Katalysator nur einmal in den Reaktor dosiert. Dieser sollte vorzugsweise sauber, trocken und frei von basischen Verunreinigungen sein, die den DMC-Katalysator inhibieren könnten. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der OH-funktionelle Starter als Suspensionsmittel.

Um die DMC-katalysierte Umsetzung zu starten, kann es vorteilhaft sein, den Katalysator zunächst mit einer Portion der mindestens einen epoxyfunktionellen Verbindung (F), vorzugsweise ausgewählt aus der Gruppe der Alkylenoxide, insbesondere mit Propylenoxid und/oder Ethylenoxid, zu aktivieren. Nach Anspringen der Alkoxylierungsreaktion kann mit der kontinuierlichen Monomerzugabe begonnen werden.

Die Reaktionstemperatur im Falle einer DMC-katalysierten Umsetzung in Schritt c) liegt vorzugweise bei 60 °C bis 200 °C, weiter bevorzugt bei 90 °C bis 160 °C und besonders bevorzugt bei 100 °C bis 140 °C.

Der Innendruck des Reaktors im Falle einer DMC-katalysierten Umsetzung in Schritt c) beträgt bevorzugt 0,02 bar bis 100 bar, weiter bevorzugt 0,05 bar bis 20 bar, besonders bevorzugt 0,1 bar bis 10 bar (absolut). Besonders bevorzugt wird eine DMC-katalysierte Umsetzung in Schritt c) bei einer Temperatur von 100 °C bis 140 °C und einem Druck von 0,1 bar bis 10 bar durchgeführt.

Die Umsetzung kann z.B. zwecks Viskositätserniedrigung in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen (also Beibehaltung z.B. der Temperatur) ohne Zugabe von Edukten durchgeführt werden. Der DMC-Katalysator verbleibt üblicherweise im Reaktionsgemisch.

Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Das fertige Produkt wird abschließend bei <100 °C filtriert, um evtl. vorhandene Trübstoffe zu entfernen.

### Basische Katalyse

Neben den DMC-Katalysatoren können im Schritt c) erfindungsgemäß auch basische Katalysatoren verwendet werden. Geeignet sind insbesondere Alkalimetallalkoholate wie Natriummethanolat und Kaliummethanolat, die als Feststoff oder in Form ihrer methanolischen Lösungen zugefügt werden. Darüber hinaus können alle Alkalihydroxide, insbesondere Natriumhydroxid und Kaliumhydroxid eingesetzt werden, und zwar sowohl als Feststoff als auch als z.B. wässrige oder alkoholische Lösungen. Darüber hinaus können erfindungsgemäß auch basische Stickstoffverbindungen, bevorzugt Amine, Guanidine und Amidine, besonders bevorzugt tertiäre Amine wie Trimethylamin und Triethylamin verwendet werden.

Es ist bevorzugt, die basischen Katalysatoren in einer Konzentration von >0 mol-% bis 100 mol-%, bevorzugt >0 mol-% bis 50 mol-%, besonders bevorzugt 3 mol-% bis 40 mol-% bezogen auf die Menge der OH-Gruppen des Starters einzusetzen.

Die Reaktionstemperatur im Falle einer basisch katalysierten Umsetzung in Schritt c) liegt vorzugweise bei 80 °C bis 200 °C, weiter bevorzugt bei 90 °C bis 160 °C und besonders bevorzugt bei 100 °C bis 160 °C.

Der Innendruck des Reaktors im Falle einer basisch katalysierten Umsetzung in Schritt c) beträgt bevorzugt 0,2 bar bis 100 bar, weiter bevorzugt 0,5 bar bis 20 bar, besonders bevorzugt 1 bar bis 10 bar (absolut).

Besonders bevorzugt wird die basisch katalysierte Umsetzung in Schritt c) bei einer Temperatur von 100 °C bis 160 °C und einem Druck von 1 bar bis 10 bar durchgeführt.

Die Umsetzung kann optional in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen ohne Zugabe von Edukten durchgeführt werden. Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Flüchtige Katalysatoren wie Amine werden dabei entfernt.

Zur Neutralisation der basischen Rohprodukte werden Säuren wie Phosphorsäure oder Schwefelsäure oder Carbonsäuren wie Essigsäure und Milchsäure zugefügt. Bevorzugt ist der Einsatz wässriger Phosphorsäure und Milchsäure. Die Einsatzmenge der jeweiligen Säure richtet sich nach der zuvor verwendeten Menge an basischem Katalysator. Das basische Polybutadien mit seitständigen Polyetherresten wird in Gegenwart der Säure bei vorzugsweise 40 °C bis 95 °C gerührt und anschließend in einer Vakuumdestillation bei <100 mbar und 80 °C bis 130 °C trocken destilliert. Das neutralisierte Produkt wird abschließend vorzugsweise bei <100 °C filtriert, um ausgefällte Salze zu entfernen.

Es ist bevorzugt, dass die erfindungsgemäßen Endprodukte einen Wassergehalt von <0,2 % (angegeben als Massenanteil bezogen auf die Gesamtmasse des Endprodukts) und eine Säurezahl von <0,5 mg KOH/g haben und praktisch phosphatfrei sind.

### Produkte als Starter

Nicht immer ist es möglich, die gewünschte Molmasse des Endpropdukts in nur einem einzigen Reaktionsschritt, insbesondere Alkoxylierungsschritt, zu erreichen. Besonders, wenn lange Polyetherseitenketten angestrebt werden und/oder der Starter aus Schritt b) eine hohe OH-Funktionalität aufweist, müssen große Mengen an Epoxidmonomeren addiert werden. Dies lässt die Reaktorgeometrie manchmal nicht zu. Die erfindungsgemäß hergestellten polyethermodifizierten Polybutadiene (G) aus Schritt c) tragen an den Enden ihrer seitständigen Polyetherreste jeweils eine OH Gruppe und eignen sich daher ihrerseits als Starter für den Aufbau höhermolekularer Folgeprodukte. Sie stellen im Sinne der Erfindung Vorprodukte und Startverbindungen für die Synthese von Polybutadienen mit längeren Polyetherresten dar. Die Umsetzung der mindestens einen epoxyfunktionellen Verbindung (F) kann in Schritt c) also in mehreren Teilschritten erfolgen.

Ein mit Hilfe der DMC-Katalyse gemäß Schritt c) hergestelltes Produkt kann erfindungsgemäß wahlweise mittels DMC-Katalyse oder unter Einsatz einer der vorgenannten basischen oder sauren Katalysatoren durch erneute Addition von Epoxidmonomeren aufalkoxyliert werden. Optional kann weiterer DMC-Katalysator zugefügt werden, um z.B. die Reaktionsgeschwindigkeit bei der Kettenverlängerung zu steigern.

Ebenso kann ein unter Basenkatalyse hergestelltes Produkt aus Schritt c) wahlweise basisch, sauer oder mittels DMC-Katalyse zu höheren Molmassen alkoxyliert werden. In Schritt c) wird vorteilhaft auf die Neutralisation verzichtet, wenn beabsichtigt ist, das basische Vorprodukt weiter basenkatalysiert mit Monomeren umzusetzen. Optional kann weiterer basischer Katalysator zugefügt werden, um z.B. die Reaktionsgeschwindigkeit bei der Kettenverlängerung zu steigern.

### Optionaler Schritt d)

In einem optionalen weiteren Schritt d) wird das mindestens eine polyethermodifizierte Polybutadien (G) mit mindestens einem Endverkappungsreagenz (H) zu mindestens einem polyethermodifizierten Polybutadien (K) enthaltend endverkappte Polyetherreste umgesetzt.

Dabei werden die Reste B des polyethermodifizierten Polybutadiens (G), welche terminal Hydroxylgruppen aufweisen, terminal zu Ester-, Ether-, Urethan- und/oder Carbonatgruppen weiter umgesetzt. Die Endverkappung von Polyethern ist dem Fachmann bekannt, wie z.B. die Veresterung mit Carbonsäuren und Carbonsäureanhydriden, insbesondere die Acetylierung mit Hilfe von Essigsäureanhydrid, die Veretherung mit halogenierten Kohlenwasserstoffen, insbesondere die Methylierung mit Methylchlorid nach dem Prinzip der Williamson-Ether-Synthese, die Urethanisierung durch Reaktion der OH-Gruppen mit Isocyanaten, insbesondere mit Monoisocyanaten wie Stearylisocyanat und die Carbonatisierung durch Umsetzung mit Dimethylcarbonat und Diethylcarbonat.

### Optionaler Schritt e)

In einem optionalen Schritt e) wird das mindestens eine polyethermodifizierte Polybutadien (G) bzw. (K) farblich aufgehellt.

Folgt der optionale Schritt e) auf den optionalen Schritt d) so wird dabei das mindestens eine polyethermodifizierte Polybutadien (K) enthaltend endverkappte Polyetherreste farblich aufgehellt. Wird auf den optionalen Schritt d) dagegen verzichtet, so folgt der optionale Schritt e) auf Schritt c) des erfindungsgemäßen Verfahrens und das mindestens eine polyethermodifizierte Polybutadien (G) wird farblich aufgehellt. Die Farbaufhellung kann beispielsweise durch den Zusatz von Aktivkohle, vorzugsweise in einem geeigneten Lösemittel, oder durch die Behandlung mit Wasserstoffperoxid erfolgen. Die Farbaufhellung kann bevorzugt über die Gardner-Farbzahl (bestimmt gemäß DIN EN ISO 4630) ermittelt werden. Es ist dabei bevorzugt, dass sich die Gardner-Farbzahl des polyethermodifizierten Polybutadiens (G) bzw. (K) durch die Farbaufhellung um mindestens 1, vorzugsweise um mindestens 2 verringert. Besonders bevorzugt sind polyethermodifizierte Polybutadiene (G) bzw. (K) mit eine Gardner-Farbzahl von maximal 3, insbesondere von maximal 2,5.

### Reaktoren

Als Reaktoren für das erfindungsgemäße Verfahren können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

### Polyethermodifizierte Polybutadiene

Gegenstand der vorliegenden Erfindung sind ferner kammständig (seitständig) mit Polyetherresten modifizierte Polybutadiene, wie sie durch das erfindungsgemäße Verfahren hergestellt werden können.

Ein weiterer Gegenstand der Erfindung ist daher ein polyethermodifiziertes Polybutadien (G) bzw. (K) erhältlich nach dem erfindungsgemäßen Verfahren.

Vorzugsweise ist das polyethermodifizierte Polybutadien (G) bzw. (K) ein lineares Polybutadien, das kammständig (seitständig) mit Polyetherresten modifiziert ist. Es ist also bevorzugt, dass das polyethermodifizierte Polybutadien (G) bzw. (K) ein lineares Polybutadien-Rückgrat und seitständige Polyetherreste aufweist.

Ein weiterer Gegenstand der Erfindung ist ebenso ein polyethermodifiziertes Polybutadien (G) bzw. (K), das vorzugsweise nach dem erfindungsgemäßen Verfahren erhältlich ist, dadurch gekennzeichnet, dass das polyethermodifizierte Polybutadien (G) bzw. (K) Wiederholungseinheiten ausgewählt aus der Gruppe bestehend aus den zweibindigen Resten 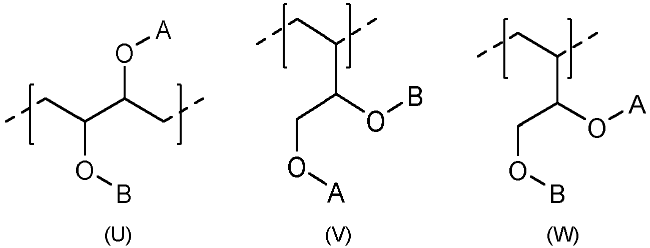 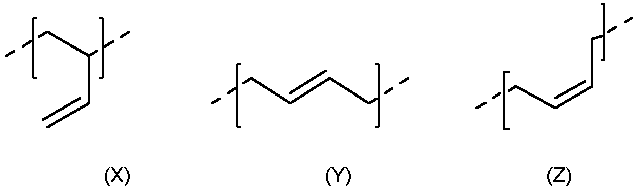 umfasst;
wobei
- A: jeweils unabhängig voneinander ein einbindiger organischer Rest oder ein Wasserstoffrest ist, bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
- B: jeweils unabhängig voneinander ausgewählt ist aus der Gruppe bestehend aus Resten der Formel (4a), 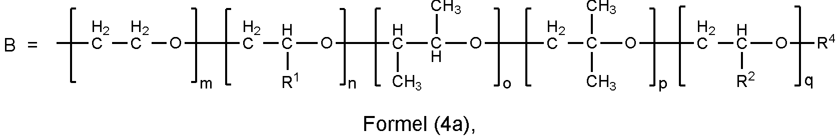
bevorzugt jeweils unabhängig voneinander ausgewählt ist aus der Gruppe bestehend aus Resten der Formel (4b), 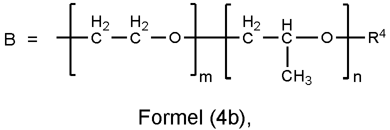 besonders bevorzugt jeweils unabhängig voneinander ausgewählt ist aus der Gruppe bestehend aus Resten der Formel (4c), 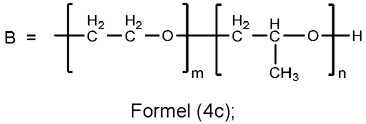
R¹ jeweils unabhängig voneinander ausgewählt ist aus der Gruppe bestehend aus einbindigen Kohlenwasserstoffresten mit 1 bis 16 Kohlenstoffatomen,
   bevorzugt jeweils unabhängig voneinander ein Alkylrest mit 1 bis 16 Kohlenstoffatomen oder ein Phenylrest ist,
   besonders bevorzugt jeweils unabhängig voneinander ein Methylrest, ein Ethylrest oder ein Phenylrest ist;
R² ein Rest der Formel -CH₂-O-R³ ist;
R³ jeweils unabhängig voneinander ausgewählt ist aus der Gruppe bestehend aus einbindigen Kohlenwasserstoffresten mit 3 bis 18 Kohlenstoffatomen;
   bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
   besonders bevorzugt ein tert-Butylphenylrest oder ein o-Kresylrest ist;
R⁴ jeweils unabhängig voneinander ein einbindiger organischer Rest mit 1 bis 18 Kohlenstoffatomen oder Wasserstoff, bevorzugt Wasserstoff ist;
   und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
und jede Permutation der Wiederholungseinheiten (U), (V), (W), (X), (Y) und (Z) sowie der Wiederholungseinheiten im Rest B mitumfasst ist,
dadurch gekennzeichnet, dass das polyethermodifizierte Polybutadien (G) beziehungsweise (K), Wiederholungseinheiten ausgewählt aus der Gruppe bestehend aus den zweibindigen Resten (U), (V) und (W) umfasst.

Die Reste R¹, R², R³ und R⁴ können dabei jeweils unabhängig voneinander linear oder verzweigt, gesättigt oder ungesättigt, aliphatisch oder aromatisch, substituiert oder unsubstituiert sein.

Die allgemeine Schreibweise 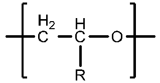 mit R = R¹ oder R² in Formel (4a) bzw. R = CH₃ in den Formeln (4b) und (4c) steht dabei sowohl für eine Einheit der Formel 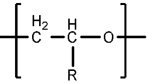 als auch eine für eine Einheit der Formel 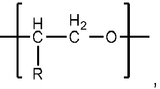 vorzugweise aber für eine Einheit der Formel

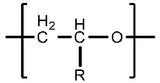

Die allgemeine Schreibweise 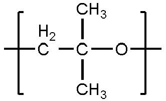 in Formel (4a) steht dabei sowohl für eine Einheit der Formel 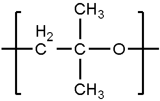 als auch eine für eine Einheit der Formel 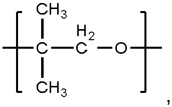 vorzugweise aber für eine Einheit der Formel

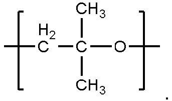

Es ist weiterhin bevorzugt, dass der Rest R⁴ jeweils unabhängig voneinander ausgewählt ist aus der Gruppe bestehend aus einwertigen Kohlenwasserstoffresten mit 1 bis 18 Kohlenstoffatomen, Acylresten -C(=O)R⁵, Urethanresten -C(=O)NH-R⁶, Carbonatresten -C(=O)O-R⁷ und Wasserstoff; weiter bevorzugt ist R⁴ jeweils unabhängig voneinander ausgewählt ist aus der Gruppe bestehend aus Alkylresten mit 1 bis 18 Kohlenstoffatomen, Alkylenresten mit 1 bis 18 Kohlenstoffatomen, Acylresten -C(=O)R⁵, Urethanresten -C(=O)NH-R⁶, Carbonatresten -C(=O)O-R⁷ und Wasserstoff; besonders bevorzugt ist R⁴ Wasserstoff.

R⁵ ist jeweils unabhängig voneinander ein Alkyl- oder ein Alkenylrest mit 1 bis 18 Kohlenstoffatomen, bevorzugt mit 1 bis 10 Kohlenstoffatomen, besonders bevorzugt ein Methylrest.

R⁶ ist jeweils unabhängig voneinander ein Alkyl- oder ein Arylrest mit 1 bis 18 Kohlenstoffatomen, bevorzugt mit 6 bis 18 C-Atomen.

R⁷ ist jeweils unabhängig voneinander ein Alkylrest mit 1 bis 18 Kohlenstoffatomen, bevorzugt mit 1 bis 2 Kohlenstoffatomen.

Es ist dabei bevorzugt, dass die Summe aller Wiederholungseinheiten (U), (V) und (W) dividiert durch die Summe aller Wiederholungseinheiten (U), (V), (W), (X), (Y) und (Z) des mindestens einen polyethermodifizierten Polybutadiens (G) bzw. (K) von >0 % bis 70 %, bevorzugt von 1 % bis 50 %, weiter bevorzugt von 2 % bis 40 %, noch weiter bevorzugt von 3 % bis 30 %, besonders bevorzugt von 4 % bis 20 % beträgt.

Das bedeutet, dass >0 % bis 70 %, bevorzugt 1 % bis 50 %, weiter bevorzugt von 2 % bis 40 %, noch weiter bevorzugt von 3 % bis 30 %, besonders bevorzugt von 4 % bis 20 % der Gesamtheit der Wiederholungseinheiten (U), (V), (W), (X), (Y) und (Z) polyethermodifiziert sind.

Es ist bevorzugt, dass das polyethermodifizierte Polybutadien (G) bzw. (K) ein mit seitständigen Polyetherresten ausgestattetes Polybutadien der Formel (5) ist, 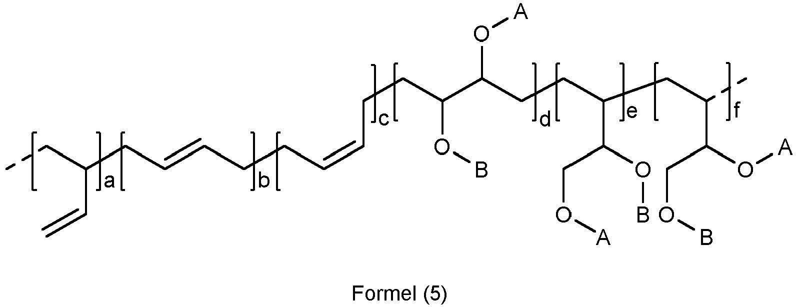 wobei der Anteil der in Formel (5) aufgeführten polyethermodifizierten Wiederholungseinheiten bezogen auf die Summe aller in Formel (5) aufgeführten Wiederholungseinheiten >0 % bis 70 %, bevorzugt 1 % bis 50 %, weiter bevorzugt 2 % bis 40 %, noch weiter bevorzugt 3 % bis 30 %, besonders bevorzugt 4 % bis 20 % beträgt, wobei sich der Anteil nach [(d+e+f)/(a+b+c+d+e+f)] * 100% berechnet.

Die Wiederholungseinheiten mit den Indizes a, b, c, d, e und f sind beliebig, statistisch über die Polybutadienkette verteilt. Alle angegebenen Indexwerte sind daher als Mittelwerte zu verstehen.

Die zahlenmittlere Molmasse Mₙ, gewichtsmittlere Molmasse M_{w} und Polydispersität des Polybutadienteils des polyethermodifizierten Polybutadiens (G) bzw. (K) sind beliebig. Unter dem Polybutadienteil wird dabei der Teil des polyethermodifizierten Polybutadiens (G) bzw. (K) verstanden, der vom verfahrensgemäß eingesetzten Polybutadien (A) stammt. In Formel (5) ist unter dem Polybutadienteil des polyethermodifizierten Polybutadiens (G) bzw. (K), der Teil des Polymers zu verstehen, der sich aus dem polyethermodifizierten Polybutadiens (G) bzw. (K) abzüglich der Reste A-O und B-O ergibt.

Es ist bevorzugt, dass die zahlenmittlere Molmasse Mₙ des Polybutadienteils des polyethermodifizierten Polybutadien (G) bzw. (K) von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse Mₙ des Polybutadienteils des polyethermodifizierten Polybutadiens (G) bzw. (K) von 2100 g/mol bis 20000 g/mol, besonders bevorzugt von 2200 g/mol bis 10000 g/mol, ganz besonders bevorzugt von 2300 g/mol bis 5000 g/mol beträgt.

Die zahlenmittlere Molmasse Mₙ des Polybutadienteils ist dabei als die zahlenmittlere Molmasse Mₙ des zugrundeliegenden Polybutadiens (A) definiert.

Es ist weiterhin bevorzugt, dass das polyethermodifizierte Polybutadien (G) bzw. (K) im Zahlenmittel 5 bis 360, besonders bevorzugt 10 bis 180, ganz besonders bevorzugt 15 bis 90 Wiederholungseinheiten aufweist, wobei die Wiederholungseinheiten aus der Gruppe bestehend aus (U), (V), (W), (X), (Y) und (Z) ausgewählt sind.

Alternativ ist es bevorzugt, dass das polyethermodifizierte Polybutadien (G) bzw. (K) im Zahlenmittel 35 bis 360, besonders bevorzugt 40 bis 180, ganz besonders bevorzugt 45 bis 90 Wiederholungseinheiten aufweist, wobei die Wiederholungseinheiten aus der Gruppe bestehend aus (U), (V), (W), (X), (Y) und (Z) ausgewählt sind.

Es ist weiterhin bevorzugt, dass die polyethermodifizierten Polybutadiene (G) bzw. (K) dadurch gekennzeichnet sind, dass 0 % bis 80 %, bevorzugt 0 % bis 30 %, besonders bevorzugt 0 % bis 10% und ganz besonders bevorzugt 0 % bis 5 % der enthaltenen Doppelbindungen 1,2-Vinyl-Doppelbindungen sind und 20% bis 100%, bevorzugt 70 % bis 100 %, besonders bevorzugt 90 % bis 100 % und ganz besonders bevorzugt 95 % bis 100 % der enthaltenen Doppelbindungen 1,4-Doppelbindungen sind.

Bevorzugt im Sinne der Erfindung sind daher Verbindungen der Formel (5) mit einem Gehalt von 0 % bis 80 % 1,2-Vinyl-Doppelbindungen (Index a) und 20 % bis 100 % 1,4-Doppelbindungen (Summe Indizes b und c), bevorzugt mit 0 % bis 30 % 1,2-Vinyl-Doppelbindungen und 70 % bis 100 % 1,4-Doppelbindungen, besonders bevorzugt mit 0 % bis 10 % 1,2-Vinyl-Doppelbindungen und 90 % bis 100 % 1,4-Doppelbindungen und ganz besonders bevorzugt 0 % bis 5 % 1,2-Vinyl-Doppelbindungen und 95 % bis 100 % 1,4-Doppelbindungen bezogen auf die Gesamtzahl der Doppelbindungen enthaltenden Wiederholeinheiten (Summe a + b + c). Das Verhältnis von 1,4-trans-Doppelbindungen (Index b) und 1,4-cis-Doppelbindungen (Index c) ist beliebig.

Besonders bevorzugt sind Verbindungen der Formel (5) mit einem Gehalt von >95 % an Wiederholeinheiten mit Index d bezogen auf die Summe der Wiederholeinheiten d + e + f. Das Verhältnis der Wiederholeinheiten e und f zueinander ist beliebig.

Ganz besonders bevorzugt sind solche polyethermodifizierten Polybutadiene (G) bzw. (K), die sich von den oben beschriebenen Polybutadienen Polyvest^{®} 110 und Polyvest^{®} 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse der Reste B von 100 g/mol bis 20000 g/mol, bevorzugt von 200 g/mol bis 15000 g/mol, besonders bevorzugt von 400 g/mol bis 10000 g/mol beträgt. Die mittlere Molmasse der Reste B kann aus der Einwaage der eingesetzten Monomere bezogen auf die Anzahl der OH-Gruppen des eingesetzten hydroxyfunktionellen Polybutadiens (E) berechnet werden. Werden also beispielsweise 40 g Ethylenoxid eingesetzt und weist die Menge des eingesetzten hydroxyfunktionellen Polybutadiens (E) 0,05 mol OH-Gruppen auf, so beträgt die mittlere Molmasse des Rests B 800 g/mol.

Die polyethermodifizierten Polybutadiene (G) bzw. (K) sind je nach Zusammensetzung und Molmasse flüssig, pastös oder fest.

Die zahlenmittlere Molmasse Mₙ der polyethermodifizierten Polybutadiene (G) bzw. (K) beträgt bevorzugt von 1000 g/mol bis 6000 g/mol, weiter bevorzugt von 1500 g/mol bis 5000 g/mol, besonders bevorzugt von 2000 g/mol bis 4000 g/mol.

Ihre Polydispersität ist in weiten Bereichen variabel. Die Polydispersität des mindestens einen polyethermodifizierten Polybutadiens (G) bzw. (K) liegt nach GPC-Methode gegen PPG-Standard bevorzugt bei M_{w}/Mₙ von 1,5 bis 10, weiter bevorzugt zwischen 2 und 9, besonders bevorzugt zwischen 3 und 8.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Allgemeine Methoden:

### Gel-Permeations-Chromatographie (GPC):

GPC-Messungen zur Bestimmung der Polydispersität (M_{w}/Mₙ), der gewichtsmittleren Molmasse (M_{w}) und der zahlenmittleren Molmasse (Mₙ) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

*Bestimmung des Gehalts der 1,4-cis-, 1,4-trans- und 1,2-Einheiten im Polybutadien:*
Die Bestimmung des Gehalts an 1,4-cis-, 1,4-trans- und 1,2-Einheiten kann mit Hilfe der ¹H-NMR-Spektroskopie erfolgen. Diese Methode ist dem Fachmann geläufig.

*Bestimmung des Gehalts an Epoxidgruppen im Polybutadien (Epoxidgehalt, Epoxidierungsgrad):*
Die Bestimmung des Gehalts an Epoxidgruppen erfolgte mit Hilfe der ¹³C-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen Wiederholungseinheiten. Dies entspricht der Anzahl der Epoxidgruppen des epoxidierten Polybutadiens dividiert durch die Anzahl der Doppelbindungen des eingesetzten Polybutadiens.

*Bestimmung der Säurezahl:*
Die Säurezahlbestimmung wurde nach einem Titrationsverfahren in Anlehnung an die DIN EN ISO 2114 durchgeführt.

*Bestimmung der Farbaufhellung:*
Die Farbaufhellung wurde anhand der Änderung der Gardner-Farbzahl (bestimmt gemäß DIN ISO 4630) ermittelt.

### Synthesebeispiele:

### Schritt a), Herstellung epoxidierter Polybutadiene

### Beispiel A1:

Zur Herstellung eines epoxidierten Polybutadiens wurde ein Polybutadien der Formel (1) mit der Struktur x=1%, y=24% und z=75% eingesetzt (Polyvest^{®} 110). Nach dem Stand der Technik wurden in einem 20L-Reaktor unter einer Stickstoffatmosphäre 1600 g Polyvest^{®} 110 und 86,4 g konz. Ameisensäure in 4000 g Chloroform bei Raumtemperatur vorgelegt. Anschließend wurden 320 g 30%-ige H₂O₂-Lösung (30 Gew.-% H₂O₂ bezogen auf die Gesamtmasse der wässrigen Lösung) langsam zugetropft und die Lösung dann für 7 Stunden auf 50 °C erhitzt. Nach Ende der Reaktion wurde auf Raumtemperatur abgekühlt, die organische Phase abgetrennt und diese noch viermal mit dest. H₂O gewaschen. Überschüssiges Chloroform und restliches Wasser wurden abdestilliert. Es wurden1556 g des Produktes erhalten, welches mit 1000 ppm Irganox^{®} 1135 versetzt und unter Stickstoff gelagert wurde.

Die Auswertung mittels ¹³C-NMR ergab einen Epoxidierungsgrad von ca. 8,9% der Doppelbindungen.
M_{w}=4669 g/mol ; Mₙ=1931 g/mol ; M_{w}/Mₙ = 2,4

### Beispiel A2:

Nach dem in Beispiel A1 beschriebenen Verfahren wurden im 2L-Vierhalskolben 200 g Polyvest^{®} 110 und 6,5 g konz. Ameisensäure in 200 g Chloroform vorgelegt und mit 24 g 30%-iger H₂O₂ Lösung (30 Gew.-% H₂O₂ bezogen auf die Gesamtmasse der wässrigen Lösung) versetzt. Nach 7 Stunden bei 50 °C, Phasentrennung, waschen mit dest. H₂O und anschließender Destillation wurden 191 g eines epoxidierten Polybutadiens mit einem Epoxidierungsgrad von ca. 6,7% der Doppelbindungen gemäß ¹³C-NMR-Analyse erzielt.
M_{w}=4624 g/mol ; Mₙ=2022 g/mol ; M_{w}/Mₙ= 2,3

### Beispiel A3:

Nach dem in Beispiel A1 beschriebenen Verfahren wurden in einem 2L-Vierhalskolben 200 g Polyvest^{®} 110 und 19,5 g konz. Ameisensäure in 200 g Chloroform vorgelegt und mit 72 g 30%-iger H₂O₂ Lösung (30 Gew.-% H₂O₂ bezogen auf die Gesamtmasse der wässrigen Lösung) versetzt. Nach 7 Stunden bei 50 °C, Phasentrennung, waschen mit dest. H₂O und anschließender Destillation wurden 196 g eines epoxidierten Polybutadiens mit einem Epoxidierungsgrad von ca. 16,2% der Doppelbindungen gemäß ¹³C-NMR-Analyse erzielt.
M_{w}=4943 g/mol ; Mₙ=2083 g/mol ; M_{w}/Mₙ = 2,4

### Beispiel A4:

Nach dem in Beispiel A1 beschriebenen Verfahren wurden im 2L-Vierhalskolben 200 g Polyvest^{®} 110 und 24,2 g konz. Ameisensäure in 200 g Chloroform vorgelegt und mit 89,3 g 30%-iger H₂O₂ Lösung (30 Gew.-% H₂O₂ bezogen auf die Gesamtmasse der wässrigen Lösung) versetzt. Nach 7 Stunden bei 50 °C, Phasentrennung, waschen mit dest. H₂O und anschließender Destillation wurden 204 g eines epoxidierten Polybutadiens mit einem Epoxidierungsgrad von ca. 21,0% der Doppelbindungen gemäß ¹³C-NMR-Analyse erzielt.
M_{w}=4843 g/mol ; Mₙ=2025 g/mol ; M_{w}/Mₙ = 2,4

### Beispiel A5:

Nach dem in Beispiel A1 beschriebenen Verfahren wurden im 2L-Vierhalskolben 200 g Polyvest^{®} 110 und 10,8 g konz. Ameisensäure in 200 g Toluol vorgelegt und mit 40 g 30%-iger H₂O₂ Lösung (30 Gew.-% H₂O₂ bezogen auf die Gesamtmasse der wässrigen Lösung) versetzt. Nach 10 Stunden bei 50 °C, Phasentrennung, waschen mit ges. NaHCO₃-Lsg. und anschließender Destillation wurden 172 g eines epoxidierten Polybutadiens mit einem Epoxidierungsgrad von ca. 7,6% der Doppelbindungen gemäß ¹³C-NMR-Analyse erzielt.
M_{w}=4634 g/mol ; Mₙ=2020 g/mol ; M_{w}/Mₙ = 2,3

### Beispiel A6:

Nach dem in Beispiel A1 beschriebenen Verfahren wurden im 20L-Reaktor 2000 g eines Polybutadiens der Formel (1) mit der Struktur x=1%, y=22% und z=77% eingesetzt (Polyvest^{®} 130) und 191 g konz. Ameisensäure in 5000 g Chloroform vorgelegt und mit 710 g 30%-iger H₂O₂ Lösung (30 Gew.-% H₂O₂ bezogen auf die Gesamtmasse der wässrigen Lösung) versetzt. Nach 7 Stunden bei 50 °C, Phasentrennung, waschen mit dest. H₂O und anschließender Destillation wurden 1980 g eines epoxidierten Polybutadiens mit einem Epoxidierungsgrad von ca. 14,6% der Doppelbindungen gemäß ¹³C-NMR-Analyse erzielt.
M_{w}=15.333 g/mol ; Mₙ=3455 g/mol ; M_{w}/Mₙ = 4,4

### Beispiel A7:

Nach dem in Beispiel A1 beschriebenen Verfahren wurden im 2L-Vierhalskolben 800 g Polyvest^{®} 110 und 43,2 g konz. Ameisensäure in 800 g Chloroform vorgelegt und mit 160 g 30%-iger H₂O₂ Lösung (30 Gew.-% H₂O₂ bezogen auf die Gesamtmasse der wässrigen Lösung) versetzt. Nach 5 Stunden bei 50 °C, Phasentrennung, waschen mit dest. H₂O und anschließender Destillation wurden 755 g eines epoxidierten Polybutadiens mit einem Epoxidierungsgrad von ca. 8,7% der Doppelbindungen gemäß ¹³C-NMR-Analyse erzielt.
M_{w}=4593 g/mol ; Mₙ=1975 g/mol ; M_{w}/Mₙ = 2,3

### Beispiel A8:

Nach dem in Beispiel A1 beschriebenen Verfahren wurden im 2L-Vierhalskolben 200 g eines Polybutadiens der Formel (1) mit der Struktur x=40%, y+z=60% eingesetzt (Lithene ultra AL) und 122 g konz. Ameisensäure in 200 g Chloroform vorgelegt und mit 299 g 30%-iger H₂O₂ Lösung (30 Gew.-% H₂O₂ bezogen auf die Gesamtmasse der wässrigen Lösung) versetzt. Nach 7 Stunden bei 50 °C, Phasentrennung, waschen mit dest. H₂O und anschließender Destillation wurden 218 g eines epoxidierten Polybutadiens mit einem Epoxidierungsgrad von ca. 60% der Doppelbindungen gemäß ¹³C-NMR-Analyse erzielt.
M_{w}=1670 g/mol ; Mₙ=832 g/mol ; M_{w}/Mₙ = 2,0

### Beispiel A9:

Nach dem in Beispiel A1 beschriebenen Verfahren wurden im 2L-Vierhalskolben 200 g eines Polybutadiens der Formel (1) mit der Struktur x=70%, y+z=30% eingesetzt (Lithene ActiV 50) und 61 g konz. Ameisensäure in 200 g Chloroform vorgelegt und mit 151 g 30%-iger H₂O₂ Lösung (30 Gew.-% H₂O₂ bezogen auf die Gesamtmasse der wässrigen Lösung) versetzt. Nach 6 Stunden bei 50 °C, Phasentrennung, waschen mit dest. H₂O und anschließender Destillation wurden 205 g eines epoxidierten Polybutadiens mit einem Epoxidierungsgrad von ca. 30% der Doppelbindungen gemäß ¹³C-NMR-Analyse erzielt.
M_{w}=1821 g/mol ; Mₙ=1045g/mol ; M_{w}/Mₙ= 1,7

### Schritt b), Herstellung OH-funktioneller Polybutadiene

### Beispiel B1:

Zur Herstellung eines hydroxylierten Polybutadiens mit einem Hydroxylierungsgrad von ca. 21% wurde das in Beispiel A4 hergestellte epoxidierte Polybutadien eingesetzt. Der Hydroxylierungsgrad ist dabei die Anzahl der OH-Gruppen des OH-funktionellen Polybutadiens dividiert durch die Anzahl der Doppelbindungen des in Schritt a) eingesetzten Polybutadiens. Zur Herstellung wurden in einem 100 mL-Vierhalskolben unter einer Stickstoffatmosphäre 18 g des epoxidierten Polybutadiens in 45 g n-Propanol vorgelegt und unter Rühren mit 80wppm Trifluormethansulfonsäure (bezogen auf Masse epoxidiertes Polybutadien) gelöst in n-Propanol (1%ige Lösung) versetzt. Anschließend wurde auf 70 °C erhitzt und das Gemisch für 8 Stunden bei dieser Temperatur gerührt. Während der Reaktion klart das Reaktionsgemisch auf. Nach beendeter Reaktion wurde auf Raumtempertaur abgekühlt und die Lösung durch Zugabe von 0,8 mg festem NaHCO₃ neutralisiert und anschließend filtriert. Der überschüssige Alkohol wurde im Vakuum. abdestilliert. Der durch Destillation zurückgewonnene Alkohol kann bei Folgesynthesen wieder eingesetzt werden. Es wurden 16,9 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 21% ergibt.
M_{w}=14.463 g/mol ; Mₙ=2789 g/mol ; M_{w}/Mₙ = 5,2

### Beispiel B2:

Zur Herstellung eines hydroxylierten Polybutadiens mit einem Hydroxylierungsgrad von ca. 8,9% wurden nach dem in Beispiel B1 beschriebenen Verfahren 20 g des in Beispiel A1 hergestellten epoxidierten Polybutadiens in 45 g n-Propanol vorgelegt und unter Rühren mit 80wppm Trifluormethansulfonsäure (bezogen auf Masse epoxidiertes Polybutadien) gelöst in n-Propanol (1%ige Lösung) versetzt. Nach 7-stündigem Rühren bei 70 °C wurde das Reaktionsgemisch bei Raumtemperatur (RT) mit 0,9 mg festem NaHCO₃ neutralisiert, filtriert und der überschüssige Alkohol im Vakuum abdestilliert. Es wurden 18 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 8,9% ergibt.
M_{w}=28.138 g/mol ; Mₙ=2534 g/mol ; M_{w}/Mₙ = 11,1 Beispiel B3:

Zur Herstellung eines hydroxylierten Polybutadiens mit einem Hydroxylierungsgrad von ca. 21% wurden nach dem in Beispiel B1 beschriebenen Verfahren 18 g des in Beispiel A4 hergestellten epoxidierten Polybutadiens in 45 g iso-Propanol vorgelegt und unter Rühren mit 80wppm Trifluormethansulfonsäure (bezogen auf Masse epoxidiertes Polybutadien) gelöst in iso-Propanol (1%ige Lösung) versetzt. Nach 7-stündigem Rühren bei 70 °C wurde das Reaktionsgemisch bei RT mit 0,8 mg festem NaHCO₃ neutralisiert, filtriert und der überschüssige Alkohol im Vakuum abdestilliert. Es wurden 16,4 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 21% ergibt.
M_{w}=14.012 g/mol ; Mₙ=2534 g/mol ; M_{w}/Mₙ = 5,5

### Beispiel B4:

Zur Herstellung eines hydroxylierten Polybutadiens mit einem Hydroxylierungsgrad von ca. 21% wurden nach dem in Beispiel B1 beschriebenen Verfahren 54 g des in Beispiel A4 hergestellten epoxidierten Polybutadiens in 135 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 5-stündigem Rühren bei 70 °C wurde das Reaktionsgemisch bei RT mit 2,4 mg festem NaHCO₃ neutralisiert, filtriert und der überschüssige Alkohol im Vakuum abdestilliert. Es wurden 50 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 21% ergibt.
M_{w}=11.357 g/mol ; Mₙ=2690 g/mol ; M_{w}/Mₙ = 4,2

### Beispiel B5:

Zur Herstellung eines hydroxylierten Polybutadiens mit einem Hydroxylierungsgrad von ca. 8,9% wurden in einem 20L-Reaktor nach dem in Beispiel B1 beschriebenen Verfahren 1500 g des in Beispiel A1 hergestellten epoxidierten Polybutadiens in 3150 g iso-Butanol, welches in Beispiel B6 durch Destillation rückgewonnen wurde, vorgelegt und unter Rühren mit 80wppm Trifluormethansulfonsäure (bezogen auf Masse epoxidiertes Polybutadien) gelöst in iso-Butanol (1%ige Lösung) versetzt. Nach 5-stündigem Rühren bei 70 °C wurde das Reaktionsgemisch bei RT mit 67,5 mg festem NaHCO₃ neutralisiert, filtriert und der überschüssige Alkohol im Vakuum abdestilliert. Es wurden 1380 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 8,9% ergibt.
M_{w}=8597 g/mol ; Mₙ=2306 g/mol ; M_{w}/Mₙ = 3,7

### Beispiel B6:

Zur Herstellung eines hydroxylierten Polybutadiens mit einem Hydroxylierungsgrad von ca. 14,6% wurden in einem 20L-Reaktor nach dem in Beispiel B1 beschriebenen Verfahren 1600 g des in Beispiel A6 hergestellten epoxidierten Polybutadiens in 4500 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 10-stündigem Rühren bei 70 °C wurde das Reaktionsgemisch bei RT mit 72 mg festem NaHCO₃ neutralisiert, filtriert und der überschüssige Alkohol im Vakuum abdestilliert. Es wurden 1470 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 14,6% ergibt.
M_{w}=51.674 g/mol ; Mₙ=4081 g/mol ; M_{w}/Mₙ= 12,7

### Beispiel B7:

Zur Herstellung eines hydroxylierten Polybutadiens mit einem Hydroxylierungsgrad von ca. 8,7% wurden in einem 2L-Reaktor nach dem in Beispiel B1 beschriebenen Verfahren 720 g des in Beispiel A7 hergestellten epoxidierten Polybutadiens in 720 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 7-stündigem Rühren bei 70 °C wurde das Reaktionsgemisch bei Raumtemperatur mit 10 ml gesättigter, wässriger NaHCO₃-Lösung, sowie Chloroform bis zum Aufklaren der Mischung versetzt. Nach 1,5-stündigem Rühren wurde filtriert und der überschüssige Alkohol, Wasser, sowie Chloroform im Vakuum abdestilliert. Es wurden 742 g eines hellgelben Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 8,7% ergibt.
M_{w}=8674 g/mol ; Mₙ=2459 g/mol ; M_{w}/Mₙ = 3,5

### Beispiel B8:

Zur Herstellung eines hydroxylierten Polybutadiens mit einem Hydroxylierungsgrad von ca. 60% wurden nach dem in Beispiel B1 beschriebenen Verfahren 200 g des in Beispiel A8 hergestellten epoxidierten Polybutadiens in 500 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 6-stündigem Rühren bei 70 °C wurde das Reaktionsgemisch bei RT mit 9,0 mg festem NaHCO₃ neutralisiert, filtriert und der überschüssige Alkohol im Vakuum abdestilliert. Es wurden 318 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 60% ergibt.
M_{w}=3140 g/mol ; Mₙ=1264 g/mol ; M_{w}/Mₙ = 2,5

### Beispiel B9:

Zur Herstellung eines hydroxylierten Polybutadiens mit einem Hydroxylierungsgrad von ca. 30% wurden nach dem in Beispiel B1 beschriebenen Verfahren 150 g des in Beispiel A9 hergestellten epoxidierten Polybutadiens in 375 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 7-stündigem Rühren bei 70 °C wurde das Reaktionsgemisch bei RT mit 6,8 mg festem NaHCO₃ neutralisiert, filtriert und der überschüssige Alkohol im Vakuum abdestilliert. Es wurden 192 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 30% ergibt.
M_{w}=2972 g/mol ; Mₙ=1100g/mol ; M_{w}/Mₙ= 2,7

### Schritt c), Alkoxylierung OH-funktioneller Polybutadiene

### Alkoxylierungen mittels DMC-Katalysator:

### Beispiel C1:

In einem 3 Liter Autoklaven wurden 335 g des in Beispiel B5 hergestellten hydroxylierten Polybutadiens und 0,45 g Zinkhexacyanocobaltat-DMC-Katalysator unter Stickstoff vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 41,0 g Propylenoxid zugeführt. Nach 15 min und Anspringen der Reaktion (Reaktorinnendruckabfall) wurden weitere 144,3 g Propylenoxid kontinuierlich und unter Kühlen in 1 h bei 130 °C und max. 0,6 bar Reaktorinnendruck (absolut) zudosiert. An die 30 minütige Nachreaktion bei 130 °C schloss sich die Entgasung an. Flüchtige Anteile wie restliches Propylenoxid wurden im Vakuum abdestilliert. Das Produkt wurde auf unter 80 °C gekühlt und eine Teilmenge von 165,5 g abgelassen. Das mittelviskose und orange-farbene, trübe alkoxylierte Polybutadien wurde mit 1000 ppm Irganox^{®} 1135 versetzt und unter Stickstoff gelagert.
M_{w}=14.310 g/mol ; Mₙ=2698 g/mol ; M_{w}/Mₙ = 5,3

Die im Reaktor verbliebene Menge wurde erneut auf 130°C geheizt und anschließend wurden kontinuierlich 126,4 g Propylenoxid addiert. Nach vollständiger Zugabe und 30-minütiger Nachreaktion wurde erneut entgast und eine weitere Teilprobe von 171,3 g Produkt entnommen. Das mittelviskose und orange-farbene, trübe alkoxylierte Polybutadien wurde mit 1000 ppm Irganox^{®} 1135 versetzt und unter Stickstoff gelagert.
M_{w}=13.450 g/mol ; Mₙ=3139 g/mol ; M_{w}/Mₙ = 4,3

Die im Reaktor verbliebene Menge wurde erneut auf 130 °C geheizt und anschließend wurden kontinuierlich 81,0 g Propylenoxid addiert. Nach vollständiger Zugabe und 30-minütiger Nachreaktion wurde erneut entgast und der gesamte Reaktorinhalt von 391,3 g abgelassen. Das mittelviskose und orange-farbene, trübe alkoxylierte Polybutadien wurde mit 1000 ppm Irganox^{®} 1135 versetzt und unter Stickstoff gelagert.
M_{w}=15.430 g/mol ; Mₙ=3723 g/mol ; M_{w}/Mₙ = 4,1

### Beispiel C2:

In einem 3 Liter Autoklaven wurden 211 g des in Beispiel B5 hergestellten hydroxylierten Polybutadiens und 0,26 g Zinkhexacyanocobaltat-DMC-Katalysator unter Stickstoff vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 28,0 g einer äquimolaren Mischung aus Propylenoxid und Ethylenoxid zugeführt. Nach 20 min und Anspringen der Reaktion (Reaktorinnendruckabfall) wurden weitere 74,3 g der EO/PO-Mischung kontinuierlich und unter Kühlen in 40 Minuten bei 130 °C und max. 0,6 bar Reaktorinnendruck (absolut) zudosiert. An die 30 minütige Nachreaktion bei 130 °C schloss sich die Entgasung an. Flüchtige Anteile wie restliches Propylenoxid und Ethylenoxid wurden im Vakuum abdestilliert. Das Produkt wurde auf unter 80 °C gekühlt und eine Teilmenge von 54 g abgelassen. Das mittelviskose und orange-farbene, trübe alkoxylierte Polybutadien wurde mit 1000 ppm Irganox^{®} 1135 versetzt und unter Stickstoff gelagert.
M_{w}=13.690 g/mol ; Mₙ=2547 g/mol ; M_{w}/Mₙ = 5,4

Die im Reaktor verbliebene Menge wurde erneut auf 130 °C geheizt und anschließend wurden kontinuierlich 84,7 g einer äquimolaren Mischung aus Propylenoxid und Ethylenoxid addiert. Nach vollständiger Zugabe und 30-minütiger Nachreaktion wurde erneut entgast und eine weitere Teilprobe von 73,1 g Produkt entnommen. Das mittelviskose und orange-farbene, trübe alkoxylierte Polybutadien wurde mit 1000 ppm Irganox^{®} 1135 versetzt und unter Stickstoff gelagert.
M_{w}=13.110 g/mol ; Mₙ=2868 g/mol ; M_{w}/Mₙ = 4,6

Die im Reaktor verbliebene Menge wurde erneut auf 130 °C geheizt und anschließend wurden kontinuierlich 66,7 g einer äquimolaren Mischung aus Propylenoxid und Ethylenoxid addiert. Nach vollständiger Zugabe und 30-minütiger Nachreaktion wurde erneut entgast und der gesamte Reaktorinhalt von 337,6 g abgelassen. Das mittelviskose und orange-farbene, trübe alkoxylierte Polybutadien wurde mit 1000 ppm Irganox^{®} 1135 versetzt und unter Stickstoff gelagert.
M_{w}=15.190 g/mol ; Mₙ=3845 g/mol ; M_{w}/Mₙ = 4,0

### Alkoxylierungen mittels alkalischer Katalysatoren:

### Beispiel C3:

In einem 3 Liter Autoklaven wurden 196,1 g des in Beispiel B5 hergestellten hydroxylierten Polybutadiens und 11,1 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Es wurden 324 g Propylenoxid kontinuierlich und unter Kühlen in 6 h bei 115 °C und max. 3,5 bar Reaktorinnendruck (absolut) zudosiert. An die 30 minütige Nachreaktion bei 115 °C schloss sich die Entgasung an. Flüchtige Anteile wie restliches Propylenoxid wurden im Vakuum abdestilliert. Das Produkt wurde auf unter 80 °C gekühlt. Eine Teilmenge von 51 g wurde abgelassen und dieses mittelviskose und orange-farbene, klare alkoxylierte Polybutadien wurde mit Milchsäure auf eine Säurezahl von 0,1 mg KOH/g neutralisiert, mit 1000 ppm Irganox^{®} 1135 versetzt und unter Stickstoff gelagert.

### M_{w}=18.690 g/mol ; Mₙ=2888 g/mol ; M_{w}/Mₙ = 6,5

Die im Reaktor verbliebene Menge wurde erneut auf 115 °C geheizt und anschließend wurden kontinuierlich 216 g Propylenoxid addiert. Nach vollständiger Zugabe und 30-minütiger Nachreaktion wurde erneut entgast, auf 95 °C abgekühlt, mit 30%-iger H₃PO₄ (30 Gew.-% H₃PO₄ in Wasser bezogen auf Gesamtmasse der Lösung) neutralisiert und mit 1000 ppm Irganox^{®} 1135 versetzt. Wasser wurde in einer Vakuumdestillation entfernt und ausgefallene Salze abfiltriert. Es wurden 675 g des klaren Produkts mit einer Säurezahl von 0,1 mg KOH/g isoliert, welches unter Stickstoff gelagert wurde.
M_{w}=22.850 g/mol ; Mₙ=3160 g/mol ; M_{w}/Mₙ= 7,2

### Beispiel C4:

In einem 3 Liter Autoklaven wurden 197,3 g des in Beispiel B5 hergestellten hydroxylierten Polybutadiens und 11,2 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Es wurden 82,5 g Ethylenoxid kontinuierlich und unter Kühlen in 45 Minuten bei 115 °C und max. 3,5 bar Reaktorinnendruck (absolut) zudosiert. An die 30 minütige Nachreaktion bei 115 °C schloss sich die Entgasung an. Flüchtige Anteile wie restliches Ethylenoxid wurden im Vakuum abdestilliert. Das Produkt wurde auf unter 80 °C gekühlt und eine Teilmenge von 49,7 g abgelassen. Das bei Raumtemperatur feste und orange-farbene, klare alkoxylierte Polybutadien wurde mit Milchsäure auf eine Säurezahl von 0,1 mg KOH/g neutralisiert, mit 1000 ppm Irganox^{®} 1135 versetzt und unter Stickstoff gelagert.
M_{w}=16.100 g/mol ; Mₙ=2945 g/mol ; M_{w}/Mₙ = 5,5

Die im Reaktor verbliebene Menge wurde erneut auf 115°C geheizt und anschließend wurden kontinuierlich 68 g Ethylenoxid addiert. Nach vollständiger Zugabe und 30-minütiger Nachreaktion wurde erneut entgast und auf 95°C abgekühlt. Eine Teilmenge von 59 g wurde abgelassen und dieses bei Raumtemperatur feste und orange-farbene, klare alkoxylierte Polybutadien wurde mit Milchsäure auf eine Säurezahl von 0,1 mg KOH/g neutralisiert, mit 1000 ppm Irganox^{®} 1135 versetzt und unter Stickstoff gelagert.
M_{w}=17.410 g/mol ; Mₙ=3413 g/mol ; M_{w}/Mₙ= 5,1

Die im Reaktor verbliebene Menge wurde erneut auf 115 °C geheizt und anschließend wurden kontinuierlich 54,4 g Ethylenoxid addiert. Nach vollständiger Zugabe und 30-minütiger Nachreaktion wurde erneut entgast und auf 95°C abgekühlt. Das restliche Produkt von 280 g wurde abgelassen und das bei Raumtemperatur feste und orange-farbene, klare alkoxylierte Polybutadien wurde mit Milchsäure auf eine Säurezahl von 0,1 mg KOH/g neutralisiert, mit 1000 ppm Irganox^{®} 1135 versetzt und unter Stickstoff gelagert.
M_{w}=19.000 g/mol ; Mₙ=3874 g/mol ; M_{w}/Mₙ = 4,9

### Beispiel C5:

In einem 3 Liter Autoklaven wurden 194 g des in Beispiel B5 hergestellten hydroxylierten Polybutadiens und 11,0 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Als Gemisch wurden gleichzeitig 94,5 g Ethylenoxid und 53,4 g Propylenoxid kontinuierlich und unter Kühlen in 5,5 Stunden bei 115 °C und max. 3,5 bar Reaktorinnendruck (absolut) zudosiert. An die 30 minütige Nachreaktion bei 115 °C schloss sich die Entgasung an. Flüchtige Anteile wie restliches Alkylenoxid wurden im Vakuum abdestilliert. Das Produkt wurde auf unter 80 °C gekühlt und eine Teilmenge von 31,3 g abgelassen. Das bei Raumtemperatur flüssige und orange-farbene, klare alkoxylierte Polybutadien wurde mit Milchsäure auf eine Säurezahl von 0,1 mg KOH/g neutralisiert, mit 1000 ppm Irganox^{®} 1135 versetzt und unter Stickstoff gelagert.
M_{w}=16.230 g/mol ; Mₙ=2810 g/mol ; M_{w}/Mₙ = 5,8

Die im Reaktor verbliebene Menge wurde erneut auf 115°C geheizt und anschließend wurden kontinuierlich und gleichzeitig 85,9 g Ethylenoxid und 48,5 g Propylenoxid als Gemisch addiert. Nach vollständiger Zugabe und 30-minütiger Nachreaktion wurde erneut entgast und auf 95 °C abgekühlt. Eine Teilmenge von 34,3 g wurde abgelassen und dieses bei Raumtemperatur flüssige und orange-farbene, klare alkoxylierte Polybutadien wurde mit Milchsäure auf eine Säurezahl von 0,1 mg KOH/g neutralisiert, mit 1000 ppm Irganox^{®} 1135 versetzt und unter Stickstoff gelagert.
M_{w}=19.160 g/mol ; Mₙ=3014 g/mol ; M_{w}/Mₙ = 6,4

Die im Reaktor verbliebene Menge wurde erneut auf 115 °C geheizt und anschließend wurden kontinuierlich und gleichzeitig 79,3 g Ethylenoxid und 44,9 g Propylenoxid als Gemisch addiert. Nach vollständiger Zugabe und 30-minütiger Nachreaktion wurde erneut entgast, auf 95 °C abgekühlt, mit 30%-iger H₃PO₄ neutralisiert und mit 1000 ppm Irganox^{®} 1135 versetzt. Wasser wurde in einer Vakuumdestillation entfernt und ausgefallene Salze abfiltriert. Es wurden 522 g des klaren Produkts mit einer Säurezahl von 0,1 mg KOH/g isoliert, welches unter Stickstoff gelagert wurde.
M_{w}=24.030 g/mol ; Mₙ=3251 g/mol ; M_{w}/Mₙ = 7,4

### Beispiel C6:

In einem 3 Liter Autoklaven wurden 208 g des in Beispiel B5 hergestellten hydroxylierten Polybutadiens und 4,6 g festes Kaliummethanolat unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um vorhandene flüchtige Inhaltsstoffe destillativ zu entfernen. Es wurden 115 g Propylenoxid kontinuierlich und unter Kühlen in 2 Stunden bei 115 °C und max. 3,0 bar Reaktorinnendruck (absolut) zudosiert. An die 30-minütige Nachreaktion bei 115 °C schloss sich die Entgasung an. Flüchtige Anteile wie restliches Propylenoxid wurden im Vakuum abdestilliert. Das Produkt wurde auf unter 80 °C gekühlt, mit Milchsäure auf eine Säurezahl von 0,1 mg KOH/g neutralisiert und mit 1000 ppm Irganox^{®} 1135 versetzt. 315 g des bei Raumtemperatur flüssigen und braunen, klaren alkoxylierten Polybutadiens wurde erhalten und unter Stickstoff gelagert.
M_{w}=14.350 g/mol ; Mₙ=2657 g/mol ; M_{w}/Mₙ = 5,4

### Beispiel C7:

In einem 3 Liter Autoklaven wurden 400 g des in Beispiel B7 hergestellten hydroxylierten Polybutadiens und 20,3 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Anschließend wurden 488 g Propylenoxid kontinuierlich und unter Kühlen in 6 Stunden bei 115 °C und max. 3,5 bar Reaktorinnendruck (absolut) zudosiert. Nach vollständiger Zugabe und 30-minütiger Nachreaktion wurde erneut entgast, auf 95 °C abgekühlt, mit 30%-iger H₃PO₄ (30 Gew.-% H₃PO₄ in Wasser bezogen auf Gesamtmasse der Lösung) neutralisiert und mit 1000 ppm Irganox^{®} 1135 versetzt. Wasser wurde in einer Vakuumdestillation entfernt und ausgefallene Salze abfiltriert. Es wurden 826 g des rotbräunlichen, klaren Produkts mit einer Säurezahl von 0,1 mg KOH/g isoliert, welches unter Stickstoff gelagert wurde.
M_{w}=14.672 g/mol ; Mₙ=2740 g/mol ; M_{w}/Mₙ = 5,4

### Beispiel C8:

In einem 3 Liter Autoklaven wurden 250 g des in Beispiel B8 hergestellten hydroxylierten Polybutadiens und 49,7 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Anschließend wurden 1202 g Propylenoxid kontinuierlich und unter Kühlen in 10 Stunden bei 115 °C und max. 3,5 bar Reaktorinnendruck (absolut) zudosiert. Nach vollständiger Zugabe und 30-minütiger Nachreaktion wurde erneut entgast, auf 95 °C abgekühlt, mit 30%-iger H₃PO₄ (30 Gew.-% H₃PO₄ in Wasser bezogen auf Gesamtmasse der Lösung) neutralisiert und mit 1000 ppm Irganox^{®} 1135 versetzt. Wasser wurde in einer Vakuumdestillation entfernt und ausgefallene Salze abfiltriert. Es wurden 1365 g des klaren Produkts mit einer Säurezahl von 0,1 mg KOH/g isoliert, welches unter Stickstoff gelagert wurde.
M_{w}=11.072 g/mol ; Mₙ=2460 g/mol ; M_{w}/Mₙ = 4,5

### Beispiel C9:

In einem 3 Liter Autoklaven wurden 150 g des in Beispiel B9 hergestellten hydroxylierten Polybutadiens und 20,0 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Anschließend wurden 484 g Propylenoxid kontinuierlich und unter Kühlen in 6 Stunden bei 115 °C und max. 3,5 bar Reaktorinnendruck (absolut) zudosiert. Nach vollständiger Zugabe und 30-minütiger Nachreaktion wurde erneut entgast, auf 95 °C abgekühlt, mit 30%-iger H₃PO₄ (30 Gew.-% H₃PO₄ in Wasser bezogen auf Gesamtmasse der Lösung) neutralisiert und mit 1000 ppm Irganox^{®} 1135 versetzt. Wasser wurde in einer Vakuumdestillation entfernt und ausgefallene Salze abfiltriert. Es wurden 599 g des klaren Produkts mit einer Säurezahl von 0,1 mg KOH/g isoliert, welches unter Stickstoff gelagert wurde.
M_{w}=8914 g/mol ; Mₙ=2073 g/mol ; M_{w}/Mₙ = 4,3

### Schritt e), Nachbehandlung zur Farbaufhellung

### Farbaufhellung durch Zusatz von Aktivkohle:

### Beispiel E1:

In einem 100 ml Einhalskolben wurden 20 g des in Beispiel C7 hergestellten alkoxylierten Polybutadiens (Gardner-Farbzahl: 4,3) mit 10 ml Chloroform und 1 g Aktivkohle (Activated Carbon Norit SX 1) versetzt. Nach 2-stündigem Rühren bei Raumtemperatur wurde die Aktivkohle abfiltriert und das überschüssige Lösemittel im Vakuum entfernt. Es wurden 19 g des farbhelleren alkoxylierten Polybutadiens isoliert.

### Gardner-Farbzahl: 2,1

### Farbaufhellung durch Zusatz von Wasserstoffperoxid:

### Beispiel E2:

In einem 100 ml Einhalskolben mit Rückflusskühler wurden 20 g des in Beispiel C7 hergestellten alkoxylierten Polybutadiens (Gardner-Farbzahl: 4,3) auf 60°C tempertiert und mit 5 Gew-% 30%-iger Wasserstoffperoxid-Lösung (30 Gew.-% H₂O₂ bezogen auf die Gesamtmasse der wässrigen Lösung) versetzt. Es wurde für 2 Stunden bei 80°C gerührt und Wasser sowie überschüssiges Wasserstoffperoxid anschließend unter Vollvakuum abdestilliert. Es wurden 20 g des farbhelleren Produkts isoliert (Gardner-Farbzahl: 1,8).

## Patentansprüche

1. Verfahren zur Herstellung von einem oder mehreren polyethermodifizierten Polybutadienen, umfassend die Schritte:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

2. Verfahren nach Anspruch 1, weiterhin umfassend den Schritt:
d) Umsetzung des mindestens einen polyethermodifizierten Polybutadiens (G) mit mindestens einem Endverkappungsreagenz (H) zu mindestens einem polyethermodifizierten Polybutadien (K) enthaltend endverkappte Polyetherreste.

3. Verfahren nach Anspruch 1 oder 2, weiterhin umfassend den Schritt:
e) Farbaufhellung des mindestens einen polyethermodifizierten Polybutadiens (G) bzw. (K).

4. Verfahren nach mindestens einem der Ansprüche 1 bis 3, **dadurch gekennzeichnet, dass** von den Doppelbindungen aller eingesetzten Polybutadiene (A) 0 % bis 80 % 1,2-Vinyl-Doppelbindungen und 20 % bis 100 % 1,4-Doppelbindungen, bevorzugt 0 % bis 30 % 1,2-Vinyl-Doppelbindungen und 70 % bis 100 % 1,4-Doppelbindungen, besonders bevorzugt 0 % bis 10 % 1,2-Vinyl-Doppelbindungen und 90 % bis 100 % 1,4-Doppelbindungen, ganz besonders bevorzugt 0 % bis 5 % 1,2-Vinyl-Doppelbindungen und 95 % bis 100 % 1,4-Doppelbindungen sind.

5. Verfahren nach mindestens einem der Ansprüche 1 bis 4, **dadurch gekennzeichnet, dass** die zahlenmittlere Molmasse Mₙ des mindestens einen Polybutadiens (A) von 200 g/mol bis 20000 g/mol, bevorzugt von 500 g/mol bis 10000 g/mol, besonders bevorzugt von 700 g/mol bis 5000 g/mol beträgt, bestimmt wie in der Beschreibung angegeben.

6. Verfahren nach mindestens einem der Ansprüche 1 bis 5, **dadurch gekennzeichnet, dass** >0 % bis 70 %, bevorzugt 1 % bis 50 %, weiter bevorzugt 2 % bis 40 %, noch weiter bevorzugt 3% bis 30 % und besonders bevorzugt 4 % bis 20 % der Doppelbindungen des mindestens einen Polybutadiens (A) epoxidiert werden.

7. Verfahren nach mindestens einem der Ansprüche 1 bis 6, **dadurch gekennzeichnet, dass** das mindestens eine Epoxidierungsreagenz (B) Perameisensäure enthält, welche vorzugweise *in situ* aus Ameisensäure und Wasserstoffperoxid gebildet wird.

8. Verfahren nach mindestens einem der Ansprüche 1 bis 7, **dadurch gekennzeichnet, dass** die mindestens eine hydroxyfunktionelle Verbindungen (D) ausgewählt ist aus der Gruppe der monofunktionellen Alkohole mit 1 bis 6 Kohlenstoffatomen, bevorzugt aus der Gruppe der monofunktionellen Alkohole mit 2 bis 4 Kohlenstoffatomen, besonders bevorzugt aus der Gruppe bestehend aus Ethanol, 1-Propanol, Isopropanol, 1-Butanol, 2-Butanol und Isobutanol.

9. Verfahren nach mindestens einem der Ansprüche 1 bis 8, **dadurch gekennzeichnet, dass** im Schritt b) die Gesamtzahl der Hydroxygruppen aller hydroxyfunktionellen Verbindungen (D) zur Gesamtzahl der Epoxidgruppen aller epoxyfunktionellen Polybutadiene (C) von >1:1 bis 50:1, bevorzugt von 2:1 bis 35:1, weiter bevorzugt 3:1 bis 30:1, besonders bevorzugt von 3:1 bis 25:1 beträgt.

10. Verfahren nach mindestens einem der Ansprüche 1 bis 9, **dadurch gekennzeichnet, dass** im Schritt b) eine Säure, bevorzugt Schwefelsäure, Sulfonsäuren und/oder Trifluoressigsäure, besonders bevorzugt Trifluormethansulfonsäure als Katalysator eingesetzt wird.

11. Verfahren nach mindestens einem der Ansprüche 1 bis 10, **dadurch gekennzeichnet, dass** die mindestens eine im Schritt c) eingesetzte epoxyfunktionelle Verbindung ausgewählt ist
a. aus der Gruppe der Alkylenoxide mit 2 bis 18 Kohlenstoffatomen,
bevorzugt aus der Gruppe der Alkylenoxide mit 2 bis 8 Kohlenstoffatomen,
besonders bevorzugt ausgewählt aus der Gruppe bestehend aus Ethylenoxid, Propylenoxid, 1-Butylenoxid, *cis*-2-Butylenoxid, *trans-*2-Butylenoxid, Isobutylenoxid und Styroloxid,
und/oder
b. aus der Gruppe der Glycidylverbindungen,
bevorzugt aus der Gruppe der monofunktionellen Glycidylverbindungen,
besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, C₁₂/C₁₄-Fettalkoholglycidylether und C₁₃/C₁₅-Fettalkoholglycidylether.

12. Verfahren nach mindestens einem der Ansprüche 1 bis 11, **dadurch gekennzeichnet, dass** im Schritt c) ein Alkoxylierungskatalysator eingesetzt wird; bevorzugt ausgewählt aus der Gruppe bestehend aus Alkalihydroxiden, Alkalialkoholaten, Aminen, Guanidinen, Amidinen, Phosphinen, SnCl₄, SnCl₂, SnF₂, BF₃, BF₃-Komplexen und Doppelmetallcyanid (DMC)-Katalysatoren; besonders bevorzugt ausgewählt aus der Gruppe bestehend aus Zn/Co-Doppelmetallcyanid-Katalysatoren, Aminen, Guanidinen, Amidinen, Alkalihydroxiden und Alkalialkoholaten.

13. Polyethermodifiziertes Polybutadien (G) beziehungsweise (K) erhältlich nach einem Verfahren nach mindestens einem der Ansprüche 1 bis 12.

14. Polyethermodifiziertes Polybutadien (G) beziehungsweise (K), vorzugsweise nach Anspruch 13, **dadurch gekennzeichnet, dass** das polyethermodifizierte Polybutadien (G) beziehungsweise (K), Wiederholungseinheiten ausgewählt aus der Gruppe bestehend aus den zweibindigen Resten 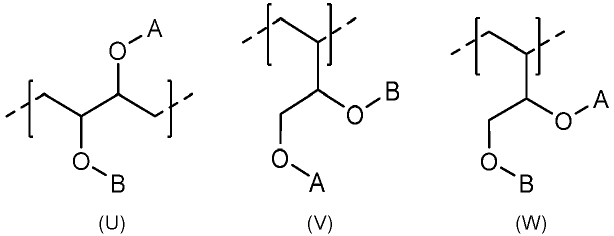 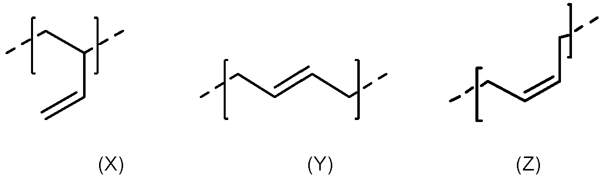 umfasst;
wobei
A jeweils unabhängig voneinander ein einbindiger organischer Rest oder ein Wasserstoffrest ist, bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen,
B jeweils unabhängig voneinander ausgewählt ist aus der Gruppe bestehend aus Resten der Formel (4a), 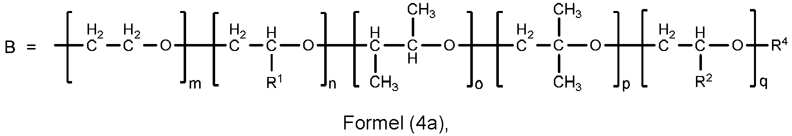
bevorzugt jeweils unabhängig voneinander ausgewählt ist aus der Gruppe bestehend aus Resten der Formel (4b), 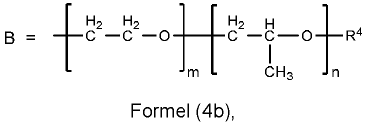 besonders bevorzugt jeweils unabhängig voneinander ausgewählt ist aus der Gruppe bestehend aus Resten der Formel (4c), 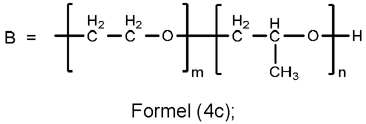
R¹ jeweils unabhängig voneinander ausgewählt ist aus der Gruppe bestehend aus einbindigen Kohlenwasserstoffresten mit 1 bis 16 Kohlenstoffatomen,
bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;
R² ein Rest der Formel -CH₂-O-R³ ist;
R³ jeweils unabhängig voneinander ausgewählt ist aus der Gruppe bestehend aus einbindigen Kohlenwasserstoffresten mit 3 bis 18 Kohlenstoffatomen;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
besonders bevorzugt ein tert-Butylphenylrest oder ein o-Kresylrest ist;
R⁴ jeweils unabhängig voneinander ein einbindiger organischer Rest mit 1 bis 18 Kohlenstoffatomen oder Wasserstoff, bevorzugt Wasserstoff ist;
und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
und jede Permutation der Wiederholungseinheiten (U), (V), (W), (X), (Y) und (Z) sowie der Wiederholungseinheiten im Rest B mitumfasst ist
**dadurch gekennzeichnet, dass** das polyethermodifizierte Polybutadien (G) beziehungsweise (K), Wiederholungseinheiten ausgewählt aus der Gruppe bestehend aus den zweibindigen Resten (U), (V) und (W) umfasst.

15. Das polyethermodifizierte Polybutadien nach Anspruch 14, **dadurch gekennzeichnet, dass** die Summe aller Wiederholungseinheiten (U), (V) und (W) dividiert durch die Summe aller Wiederholungseinheiten (U), (V), (W), (X), (Y) und (Z) von >0 % bis 70 %, bevorzugt 1 % bis 50 %, weiter bevorzugt von 2 % bis 40 %, noch weiter bevorzugt von 3 % bis 30 %, besonders bevorzugt von 4 % bis 20 % beträgt.

16. Das polyethermodifizierte Polybutadien (G) nach mindestens einem der Ansprüche 13 bis 15, **dadurch gekennzeichnet, dass** es sich um ein Polybutadien der Formel (5) handelt 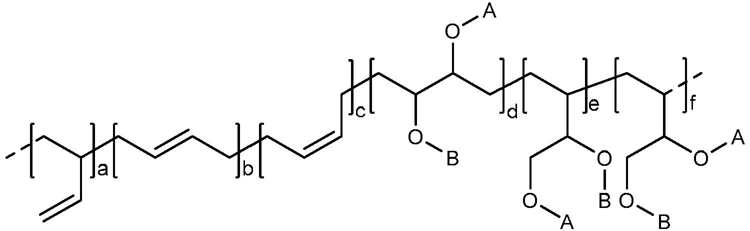 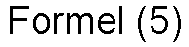 wobei der Anteil der in Formel (5) aufgeführten polyethermodifizierten Wiederholungseinheiten bezogen auf die Summe aller in Formel (5) aufgeführten Wiederholungseinheiten >0 % bis 70 %, bevorzugt 1 % bis 50 %, weiter bevorzugt 2 % bis 40 %, noch weiter bevorzugt 3 % bis 30 %, besonders bevorzugt 4 % bis 20 % beträgt, wobei sich der Anteil nach [(d+e+f)/(a+b+c+d+e+f)]*100% berechnet.

17. Das polyethermodifizierte Polybutadien nach mindestens einem der Ansprüche 13 bis 16, **dadurch gekennzeichnet, dass** die zahlenmittlere Molmasse Mₙ des Polybutadienteils von 200 g/mol bis 20000 g/mol, bevorzugt von 500 g/mol bis 10000 g/mol, besonders bevorzugt von 700 g/mol bis 5000 g/mol beträgt, bestimmt wie in der Beschreibung angegeben.

18. Das polyethermodifizierte Polybutadien nach mindestens einem der Ansprüche 13 bis 17, **dadurch gekennzeichnet, dass** 0 % bis 80 %, bevorzugt 0 % bis 30 %, besonders bevorzugt 0 % bis 10 %, ganz besonders bevorzugt 0 % bis 5 % der enthaltenen Doppelbindungen 1,2-Vinyl-Doppelbindungen sind und 20 % bis 100 %, bevorzugt 70 % bis 100 %, besonders bevorzugt 90 % bis 100 %, ganz besonders bevorzugt 95 % bis 100 % der enthaltenden Doppelbindungen 1,4-Doppelbindungen sind.

19. Polyethermodifiziertes Polybutadien nach mindestens einem der Ansprüche 13 bis 18, **dadurch gekennzeichnet, dass** die mittlere Molmasse des Rests B von 100 g/mol bis 20000 g/mol, bevorzugt von 200 g/mol bis 15000 g/mol, besonders bevorzugt von 400 g/mol bis 10000 g/mol beträgt, angegeben als Zahlenmittel und bestimmt wie in der Beschreibung angegeben.

## Claims

1. Process for preparing one or more polyether-modified polybutadienes, comprising the steps of:
a) reacting at least one polybutadiene (A) with at least one epoxidizing reagent (B) to give at least one epoxy-functional polybutadiene (C);
b) reacting the at least one epoxy-functional polybutadiene (C) with at least one hydroxy-functional compound (D) to give at least one hydroxy-functional polybutadiene (E);
c) reacting the at least one hydroxy-functional polybutadiene (E) with at least one epoxy-functional compound (F) to give at least one polyether-modified polybutadiene (G).

2. Process according to Claim 1, further comprising the step of:
d) reacting the at least one polyether-modified polybutadiene (G) with at least one end-capping reagent (H) to give at least one polyether-modified polybutadiene (K) containing end-capped polyether radicals.

3. Process according to Claim 1 or 2, further comprising the step of:
e) lightening the colour of the at least one polyether-modified polybutadiene (G) or (K).

4. Process according to at least one of Claims 1 to 3, **characterized in that**, of the double bonds of all the polybutadienes (A) used, 0% to 80% are 1,2-vinyl double bonds and 20% to 100% are 1,4 double bonds, preferably 0% to 30% are 1,2-vinyl double bonds and 70% to 100% are 1,4 double bonds, more preferably 0% to 10% are 1,2-vinyl double bonds and 90% to 100% are 1,4 double bonds, most preferably 0% to 5% are 1,2-vinyl double bonds and 95% to 100% are 1,4 double bonds.

5. Process according to at least one of Claims 1 to 4, **characterized in that** the number-average molar mass Mₙ of the at least one polybutadiene (A) is from 200 g/mol to 20 000 g/mol, preferably from 500 g/mol to 10 000 g/mol, more preferably from 700 g/mol to 5000 g/mol, determined as specified in the description.

6. Process according to at least one of Claims 1 to 5, **characterized in that** >0% to 70%, preferably 1% to 50%, more preferably 2% to 40%, even more preferably 3% to 30% and especially preferably 4% to 20% of the double bonds of the at least one polybutadiene (A) are epoxidized.

7. Process according to at least one of Claims 1 to 6, **characterized in that** the at least one epoxidizing reagent (B) contains performic acid which is preferably formed *in situ* from formic acid and hydrogen peroxide.

8. Process according to at least one of Claims 1 to 7, **characterized in that** the at least one hydroxy-functional compound (D) is selected from the group of the monofunctional alcohols having 1 to 6 carbon atoms, preferably from the group of the monofunctional alcohols having 2 to 4 carbon atoms, more preferably from the group consisting of ethanol, 1-propanol, isopropanol, 1-butanol, 2-butanol and isobutanol.

9. Process according to at least one of Claims 1 to 8, **characterized in that**, in step b), the total number of hydroxyl groups in all the hydroxy-functional compounds (D) to the total number of epoxy groups in all the epoxy-functional polybutadienes (C) is from >1:1 to 50:1, preferably from 2:1 to 35:1, further preferably 3:1 to 30:1, especially preferably from 3:1 to 25:1.

10. Process according to at least one of Claims 1 to 9, **characterized in that**, in step b), an acid, preferably sulfuric acid, sulfonic acids and/or trifluoroacetic acid, more preferably trifluoromethanesulfonic acid, is used as catalyst.

11. Process according to at least one of Claims 1 to 10, **characterized in that** the at least one epoxy-functional compound used in step c) is selected
a. from the group of the alkylene oxides having 2 to 18 carbon atoms,
preferably from the group of the alkylene oxides having 2 to 8 carbon atoms,
more preferably selected from the group consisting of ethylene oxide, propylene oxide, 1-butylene oxide, *cis-*2-butylene oxide, trans-2-butylene oxide, isobutylene oxide and styrene oxide,
and/or
b. from the group of the glycidyl compounds, preferably from the group of the monofunctional glycidyl compounds,
more preferably from the group consisting of phenyl glycidyl ether, o-cresyl glycidyl ether, tert-butylphenyl glycidyl ether, allyl glycidyl ether, butyl glycidyl ether, 2-ethylhexyl glycidyl ether, C₁₂/C₁₄ fatty alcohol glycidyl ether and C₁₃/C₁₅ fatty alcohol glycidyl ether.

12. Process according to at least one of Claims 1 to 11, **characterized in that** an alkoxylation catalyst is used in step c), preferably selected from the group consisting of alkali metal hydroxides, alkali metal alkoxides, amines, guanidines, amidines, phosphines, SnCl₄, SnCl₂, SnF₂, BF₃, BF₃ complexes and double metal cyanide (DMC) catalysts, more preferably selected from the group consisting of Zn/Co double metal cyanide catalysts, amines, guanidines, amidines, alkali metal hydroxides and alkali metal alkoxides.

13. Polyether-modified polybutadiene (G) or (K), obtainable by a process according to at least one of Claims 1 to 12.

14. Polyether-modified polybutadiene (G) or (K), preferably according to Claim 13, **characterized in that** the polyether-modified polybutadiene (G) or (K) comprises repeat units selected from the group consisting of the divalent radicals 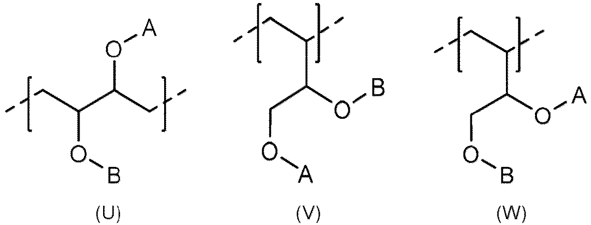 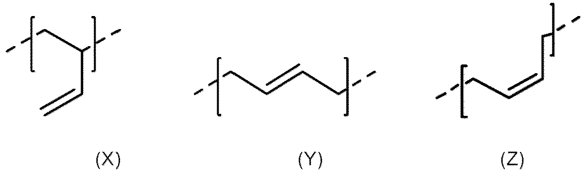 where
A is in each case independently a monovalent organic radical or a hydrogen radical, preferably in each case independently selected from the group consisting of monovalent hydrocarbon radicals having 1 to 6 carbon atoms,
more preferably in each case independently selected from the group consisting of alkyl radicals having 1 to 4 carbon atoms;
B is in each case independently selected from the group consisting of radicals of the formula (4a) 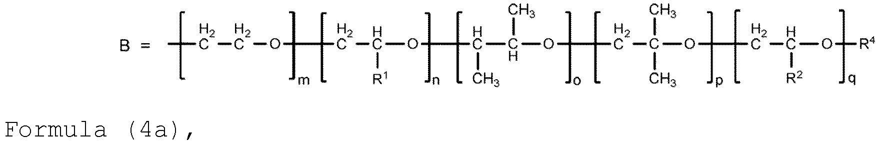
preferably in each case independently selected from the group consisting of radicals of the formula (4b) 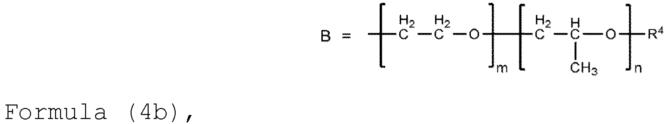
more preferably in each case independently selected from the group consisting of radicals of the formula (4c) 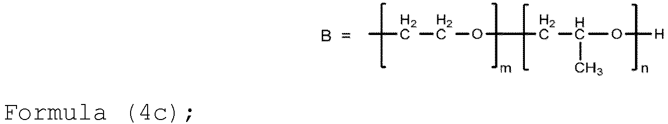
R¹ is in each case independently selected from the group consisting of monovalent hydrocarbon radicals having 1 to 16 carbon atoms,
preferably in each case independently an alkyl radical having 1 to 16 carbon atoms or a phenyl radical,
more preferably in each case independently a methyl radical, an ethyl radical or a phenyl radical;
R² is a radical of the formula -CH₂-O-R³;
R³ is in each case independently selected from the group consisting of monovalent hydrocarbon radicals having 3 to 18 carbon atoms;
preferably in each case independently an allyl radical, a butyl radical, an alkyl radical having 8 to 15 carbon atoms or a phenyl radical that may be substituted by monovalent radicals selected from hydrocarbon radicals having 1 to 4 carbon atoms;
more preferably a tert-butylphenyl radical or an o-cresyl radical;
R⁴ is in each case independently a monovalent organic radical having 1 to 18 carbon atoms or hydrogen, preferably hydrogen;
and
m, n, o, p and q are each independently 0 to 300, preferably 0 to 200, more preferably 0 to 100, with the proviso that the sum total of m, n, o, p and q is greater than 1, preferably greater than 5, more preferably greater than 10;
including every permutation of the repeat units (U), (V), (W), (X), (Y) and (Z) and of the repeat units in the B radical,
**characterized in that** the polyether-modified polybutadiene (G) or (K) comprises repeat units selected from the group consisting of the divalent radicals (U), (V) and (W).

15. Polyether-modified polybutadiene according to Claim 14, **characterized in that** the sum total of all repeat units (U), (V) and (W) divided by the sum total of all repeat units (U), (V), (W), (X), (Y) and (Z) is from >0% to 70%, preferably 1% to 50%, more preferably from 2% to 40%, even more preferably from 3% to 30%, especially preferably from 4% to 20%.

16. Polyether-modified polybutadiene (G) according to at least one of Claims 13 to 15, **characterized in that** the polybutadiene is of the formula (5) 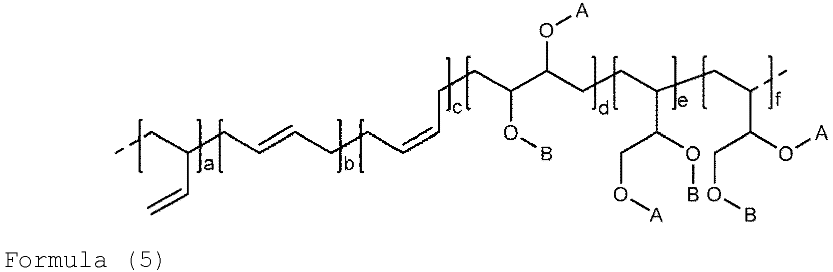 where the proportion of the polyether-modified repeat units shown in formula (5), based on the sum total of all repeat units shown in formula (5), is >0% to 70%, preferably 1% to 50%, further preferably 2% to 40%, even further preferably 3% to 30%, especially preferably 4% to 20%, where the proportion is calculated as [(d+e+f)/(a+b+c+d+e+f)]*100%.

17. Polyether-modified polybutadiene according to at least one of Claims 13 to 16, **characterized in that** the number-average molar mass Mₙ of the polybutadiene moiety is from 200 g/mol to 20 000 g/mol, preferably from 500 g/mol to 10 000 g/mol, especially preferably from 700 g/mol to 5000 g/mol, determined as specified in the description.

18. Polyether-modified polybutadiene according to at least one of Claims 13 to 17, **characterized in that** 0% to 80%, preferably 0% to 30%, particularly preferably 0% to 10%, especially preferably 0% to 5% of the double bonds present are 1,2-vinyl double bonds, and 20% to 100%, preferably 70% to 100%, particularly preferably 90% to 100%, especially preferably 95% to 100% of the double bonds present are 1,4 double bonds.

19. Polyether-modified polybutadiene according to at least one of Claims 13 to 18, **characterized in that** the average molar mass of the B radical is from 100 g/mol to 20 000 g/mol, preferably from 200 g/mol to 15 000 g/mol, more preferably from 400 g/mol to 10 000 g/mol, reported as the number average and determined as specified in the description.

## Revendications

1. Procédé de préparation d'un ou de plusieurs polybutadiènes modifiés par polyéther, comprenant les étapes :
a) mise en réaction d'au moins un polybutadiène (A) avec au moins un réactif d'époxydation (B), conduisant à au moins un polybutadiène à fonction époxy (C) ;
b) mise en réaction dudit au moins un polybutadiène à fonction époxy (C) avec au moins un composé à fonction hydroxy (D), conduisant à au moins un polybutadiène à fonction hydroxy (E) ;
c) mise en réaction dudit au moins un polybutadiène à fonction hydroxy (E) avec au moins un composé à fonction époxy (F), conduisant à au moins un polybutadiène modifié par polyéther (G).

2. Procédé selon la revendication 1, comprenant en outre l'étape :
d) mise en réaction dudit au moins un polybutadiène modifié par polyéther (G) avec au moins un réactif de terminaison de chaîne (H), conduisant à au moins un polybutadiène modifié par polyéther (K) contenant des radicaux polyéther à terminaison de chaîne.

3. Procédé selon la revendication 1 ou 2, comprenant en outre l'étape :
e) éclaircissement de la couleur dudit au moins un polybutadiène modifié par polyéther (G) ou (K).

4. Procédé selon au moins l'une des revendications 1 à 3, **caractérisé en ce que** parmi les doubles liaisons de tous les polybutadiènes (A) utilisés, 0 % à 80 % sont des doubles liaisons 1,2-vinyliques et 20 % à 100 % sont des doubles liaisons 1,4, de préférence 0 % à 30 % sont des doubles liaisons 1,2-vinyliques et 70 % à 100 % sont des doubles liaisons 1,4, de façon particulièrement préférée 0 % à 10 % sont des doubles liaisons 1,2-vinyliques et 90 % à 100 % sont des doubles liaisons 1,4, de façon tour particulièrement préférée 0 % à 5 % sont des doubles liaisons 1,2-vinyliques et 95 % à 100 % sont des doubles liaisons 1,4.

5. Procédé selon au moins l'une des revendications 1 à 4, **caractérisé en ce que** la masse molaire moyenne en nombre Mₙ dudit au moins un polybutadiène (A) vaut de 200 g/mole à 20 000 g/mole, de préférence de 500 g/mole à 10 000 g/mole, de façon particulièrement préférée de 700 g/mole à 5 000 g/mole, déterminée comme indiqué dans la description.

6. Procédé selon au moins l'une des revendications 1 à 5, **caractérisé en ce que** > 0 % à 70 %, de préférence 1 % à 50 %, encore mieux 2 % à 40 %, encore plus préférablement 3 % à 30 % et de façon particulièrement préférée 4 % à 20 % des doubles liaisons dudit au moins un polybutadiène (A) sont époxydées.

7. Procédé selon au moins l'une des revendications 1 à 6, **caractérisé en ce que** ledit au moins un réactif d'époxydation (B) contient de l'acide performique, qui est de préférence formé *in situ* à partir d'acide formique et de peroxyde d'hydrogène.

8. Procédé selon au moins l'une des revendications 1 à 7, **caractérisé en ce que** ledit au moins un composé à fonction hydroxy (D) est choisi dans le groupe des alcools monohydriques ayant de 1 à 6 atomes de carbone, de préférence dans le groupe des alcools monohydriques ayant de 2 à 4 atomes de carbone, de façon particulièrement préférée dans le groupe constitué par l'éthanol, le 1-propanol, l'isopropanol, le 1-butanol, le 2-butanol et l'isobutanol.

9. Procédé selon l'une des revendications 1 à 8, **caractérisé en ce que** dans l'étape b), le nombre total des groupes hydroxy de tous les composés à fonction hydroxy (D) au nombre total des groupes époxy de tous les polybutadiènes à fonction époxy (C) vaut de > 1:1 à 50:1, de préférence de 2:1 à 35:1, encore mieux de 3:1 à 30:1, de façon particulièrement préférée de 3:1 à 25:1.

10. Procédé selon au moins l'une des revendications 1 à 9, **caractérisé en ce que** dans l'étape b) un acide, de préférence l'acide sulfurique, des acides sulfoniques et/ou l'acide trifluoroacétique, de façon particulièrement préférée l'acide trifluorométhanesulfonique, est utilisé comme catalyseur.

11. Procédé selon au moins l'une des revendications 1 à 10, **caractérisé en ce que** ledit au moins un composé à fonction époxy utilisé dans l'étape c) est choisi
a. dans le groupe des oxydes d'alkylène ayant de 2 à 18 atomes de carbone,
de préférence dans le groupe des oxydes d'alkylène ayant de 2 à 8 atomes de carbone,
de façon particulièrement préférée dans le groupe constitué par l'oxyde d'éthylène, l'oxyde de propylène, l'oxyde de 1-butylène, l'oxyde de cis-2-butylène, l'oxyde de trans-2-butylène, l'oxyde d'isobutylène et l'oxyde de styrène,
et/ou
b. dans le groupe des composés de glycidyle,
de préférence dans le groupe des composés de glycidyle monofonctionnels,
de façon particulièrement préférée dans le groupe constitué par l'éther de phénylglycidyle, l'éther d'o-crésylglycidyle, l'éther de tert-butylphénylglycidyle, l'éther d'allylglycidyle, l'éther de butylglycidyle, l'éther de 2-éthylhexylglycidyle, les éthers glycidyliques d'alcools gras en C₁₂/C₁₄ et les éthers glycidyliques d'alcools gras en C₁₃/C₁₅.

12. Procédé selon l'une des revendications 1 à 11, **caractérisé en ce que** dans l'étape c) est utilisé un catalyseur d'alcoxylation ; de préférence choisi dans le groupe constitué par les hydroxydes de métaux alcalins, alcoolates de métaux alcalins, amines, guanidines, amidines, phosphines, SnCl₄, SnCl₂, SnF₂, BF₃, les complexes de BF₃ et les catalyseurs à base de cyanure bimétallique (DMC) ; de façon particulièrement préférée choisi dans le groupe constitué par les catalyseurs à base de cyanure bimétallique de Zn/Co, les amines, guanidines, amidines, hydroxydes de métaux alcalins et alcoolates de métaux alcalins.

13. Polybutadiène modifié par polyéther (G) ou (K) pouvant être obtenu conformément à un procédé selon au moins l'une des revendications 1 à 12.

14. Polybutadiène modifié par polyéther (G) ou (K) de préférence selon la revendication 13, **caractérisé en ce que** le polybutadiène modifié par polyéther (G) ou (K) comprend des unités répétitives choisies dans le groupe constitué par les radicaux divalents 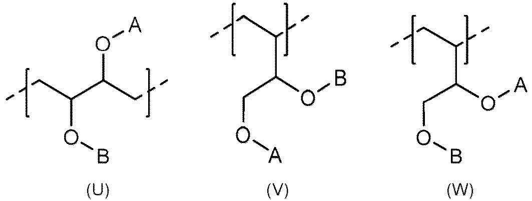 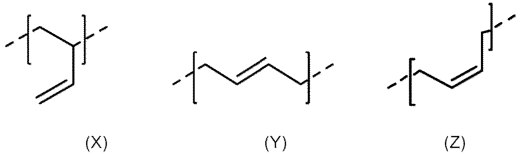 ;
dans lesquels
A est chaque fois indépendamment un radical organique monovalent ou un radical hydrogène, de préférence est choisi chaque fois indépendamment dans le groupe constitué par les radicaux hydrocarbonés monovalents ayant de 1 à 6 atomes de carbone,
de façon particulièrement préférée est choisi chaque fois indépendamment dans le groupe constitué par les radicaux alkyle ayant de 1 à 4 atomes de carbone ;
B est choisi chaque fois indépendamment dans le groupe constitué par les radicaux de formule (4a), 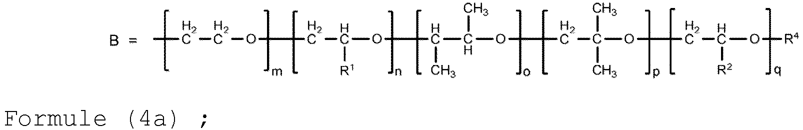
de façon préférée est choisi chaque fois indépendamment dans le groupe constitué par les radicaux de formule (4b), 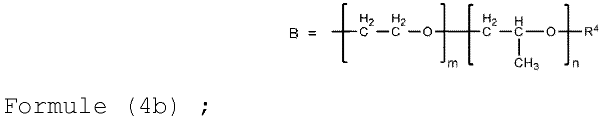
de façon particulièrement préférée est choisi chaque fois indépendamment dans le groupe constitué par les radicaux de formule (4c), 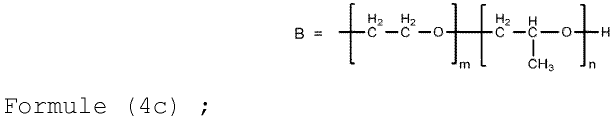
R¹ est choisi chaque fois indépendamment dans le groupe constitué par les radicaux hydrocarbonés monovalents ayant de 1 à 16 atomes de carbone ;
de préférence est chaque fois indépendamment un radical alkyle ayant de 1 à 16 atomes de carbone ou un radical phényle,
de façon particulièrement préférée est chaque fois indépendamment un radical méthyle, un radical éthyle ou un radical phényle ;
R² est un radical de formule -CH₂-O-R³ ;
R³ est choisi chaque fois indépendamment dans le groupe constitué par les radicaux hydrocarbonés monovalents ayant de 3 à 18 atomes de carbone ;
de préférence est chaque fois indépendamment un radical allyle, un radical butyle, un radical alkyle ayant de 8 à 15 atomes de carbone ou un radical phényle, qui peut être substitué par des radicaux monovalents choisis parmi les radicaux hydrocarbonés ayant de 1 à 4 atomes de carbone ;
de façon particulièrement préférée est un radical tert-butylphényle ou un radical o-crésyle ;
R⁴ représente chaque fois indépendamment un radical organique monovalent ayant de 1 à 18 atomes de carbone ou un atome d'hydrogène, de préférence un atome d'hydrogène ;
et
m, n, o, p et q valent chacun indépendamment les uns des autres 0 à 300, de préférence 0 à 200, de façon particulièrement préférée 0 à 100, étant entendu que la somme de m, n, o, p et q est supérieure à 1, de préférence supérieure à 5, de façon particulièrement préférée, supérieure à 10 ;
et toute permutation des unités répétitives (U), (V), (W), (X), (Y) et (Z) ainsi que des unités répétitives dans le radical B est incluse,
**caractérisé en ce que** le polybutadiène modifié par polyéther (G) ou (K) comprend des unités répétitives choisies dans le groupe constitué par les radicaux divalents (U), (V) et (W).

15. Polybutadiène modifié par polyéther selon la revendication 14, **caractérisé en ce que** la somme de toutes les unités répétitives (U), (V) et (W) divisée par la somme de toutes les unités répétitives (U), (V), (W), (X), (Y) et (Z) vaut de > 0 % à 70 %, de préférence 1 % à 50 %, encore mieux de 2 % à 40 %, encore plus préférablement de 3 % à 30 %, de façon particulièrement préférée de 4 % à 20 %.

16. Polybutadiène modifié par polyéther (G) selon au moins l'une des revendications 13 à 15, **caractérisé en ce qu'**il s'agit d'un polybutadiène de formule (5), 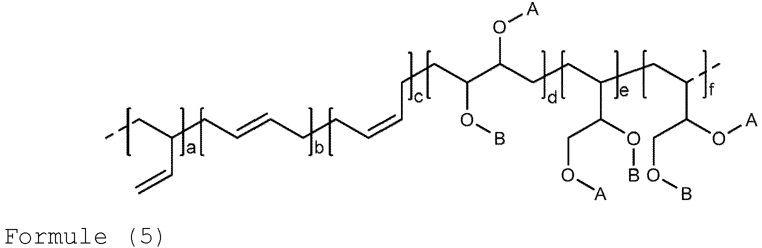 la proportion des unités répétitives modifiées par polyéther indiquées dans la formule (5) par rapport à la somme de toutes les unités répétitives indiquées dans la formule (5) valant > 0 % à 70 %, de préférence 1 % à 50 %, encore mieux 2 % à 40 %, encore plus préférablement 3 % à 30 %, de façon particulièrement préférée 4 % à 20 %, la proportion étant calculée selon [(d+e+f)/(a+b+c+d+e+f)] * 100 %.

17. Polybutadiène modifié par polyéther selon au moins l'une des revendications 13 à 16, **caractérisé en ce que** la masse molaire moyenne en nombre Mₙ de la partie polybutadiène vaut de 200 g/mole à 20 000 g/mole, de préférence de 500 g/mole à 10 000 g/mole, de façon particulièrement préférée de 700 g/mole à 5 000 g/mole, déterminée comme indiqué dans la description.

18. Polybutadiène modifié par polyéther selon au moins l'une des revendications 13 à 17, **caractérisé en ce que** 0 % à 80 %, de préférence 0 % à 30%, de façon particulièrement préférée 0 % à 10 %, de façon tout particulièrement préférée 0 % à 5 % des doubles liaisons contenues sont des doubles liaisons 1,2-vinyliques et 20 % à 100 %, de préférence 70 % à 100 %, de façon particulièrement préférée 90 % à 100 %, de façon tout particulièrement préférée 95 % à 100 % des doubles liaisons contenues sont des doubles liaisons 1,4.

19. Polybutadiène modifié par polyéther selon au moins l'une des revendications 13 à 18, **caractérisé en ce que** la masse molaire moyenne du radical B vaut de 100 g/mole à 20 000 g/mole, de préférence de 200 g/mole à 15 000 g/mole, de façon particulièrement préférée de 400 g/mole à 10 000 g/mole, exprimée en moyenne en nombre et déterminée comme indiqué dans la description.
